# EUROPEAN PATENT SPECIFICATION

(11) **EP 2 907 059 B1**
(45) Date of publication and mention of the grant of the patent: **03.04.2019**
(21) Application number: 13737143.1
(22) Date of filing: 11.07.2013
(51) Int. Cl.: G06F 17/50

(54) **COMPUTER IMPLEMENTED METHOD FOR HYBRID SIMULATION OF POWER DISTRIBUTION NETWORK AND ASSOCIATED COMMUNICATION NETWORK FOR REAL TIME APPLICATIONS**
COMPUTERIMPLEMENTIERTES VERFAHREN FÜR HYBRIDE SIMULATION EINES STROMVERSORGUNGSNETZES UND KOMMUNIKATIONSNETZ DAMIT FÜR ECHTZEITANWENDUNGEN
PROCÉDÉ INFORMATISÉ DE SIMULATION HYBRIDE D'UN RÉSEAU DE DISTRIBUTION ÉLECTRIQUE ET D'UN RÉSEAU DE COMMUNICATIONS ASSOCIÉ POUR DES APPLICATIONS EN TEMPS RÉEL

(30) Priority: 12.10.2012 EP 12007104
(43) Date of publication of application: 19.08.2015
(73) Proprietor: Technische Universität Dortmund, 44227 Dortmund (DE)
(72) Inventor: REHTANZ, Christian, 44227 Dortmund (DE); MÜLLER, Sven Christian, 58332 Schwelm (DE); GÖRNER, Kay, 44139 Dortmund (DE); WIETFELD, Christian, 44229 Dortmund (DE); GEORG, Hanno, 45883 Gelsenkirchen (DE); LEWANDOWSKI, Andreas, 44329 Dortmund (DE); HÄGERLING, Christian, 59174 Kamen (DE)
(74) Representative: Cohausz Hannig Borkowski Wißgott
(86) International application number: PCT/EP2013/002067
(87) International publication number: WO 2014/056558

(56) References cited:
- HUA LIN ET AL: "GECO: Global Event-Driven Co-Simulation Framework for Interconnected Power System and Communication Network", IEEE TRANSACTIONS ON SMART GRID, IEEE, USA, vol. 3, no. 3, 1 September 2012 (2012-09-01), pages 1444-1456, XP011457941, ISSN: 1949-3053, DOI: 10.1109/TSG.2012.2191805
- K. HOPKINSON ET AL: "EPOCHS: A Platform for Agent-Based Electric Power and Communication Simulation Built From Commercial Off-the-Shelf Components", IEEE TRANSACTIONS ON POWER SYSTEMS, vol. 21, no. 2, 1 May 2006 (2006-05-01), pages 548-558, XP055088856, ISSN: 0885-8950, DOI: 10.1109/TPWRS.2006.873129 cited in the application
- DAVIS C M ET AL: "SCADA Cyber Security Testbed Development", POWER SYMPOSIUM, 2006. NAPS 2006. 38TH NORTH AMERICAN, IEEE, PI, 1 September 2006 (2006-09-01), pages 483-488, XP031088246, DOI: 10.1109/NAPS.2006.359615 ISBN: 978-1-4244-0227-4
- Hua Lin ET AL: "Communication Infrastructure for the Smart Grid: A Co-Simulation Based Study on Techniques to Improve the Power Transmission System Functions with Efficient Data Networks", , 27 September 2012 (2012-09-27), XP055088871, Retrieved from the Internet: URL:http://scholar.lib.vt.edu/theses/avail able/etd-10112012-170844/ [retrieved on 2013-11-18]

## Description

The invention refers to the technical field of simulating an electric power distribution network. Specifically, the invention refers to a computer implemented method for hybrid simulation of an electric power distribution network and an associated communication network connected therewith for determination of a time delay between an event occurring in the power distribution network and a desired effect of a performed measure in the power distribution network, the measure having been decided on by means of a decision making algorithm as a reaction on the event.
The development of the European electrical transmission system is currently driven by several fundamental political decisions at national and international level. In addition to the liberalization of electricity markets, system operators are facing the challenge of increasingly decentralized and volatile energy production, which increases the complexity of energy forecast and load management leading to an operation of the transmission grid close to its limit. Furthermore, the emerging electric mobility and the management of shift-able loads in so called smart homes offer new challenges and approaches for both centralized and decentralized management of the power system. Here, new protection and control algorithms [A5] are necessary to assure system stability and to provide an automatic and highly dynamic real-time monitoring and management. For this purpose, communication networks became an increasingly important part of the system infrastructure, as they are not longer used for static monitoring and control exclusively, but have to fulfill real-time requirements for a dynamic management as well [A6].

Thus, power systems and especially Smart Grids increasingly apply Information and Communication Technologies (ICT) for exchanging information over wide area networks. Here, the performance of the ICT has become crucial for the development of new Wide Area Monitoring, Protection And Control (WAMPAC) [A1] systems. In this context, simulations are a common way for evaluation, but power systems and communication networks are usually analyzed with dedicated simulators. Therefore a combined simulation for analyzing the dynamics and mutual impacts of both domains is needed.

Large scale integration of renewable energies and cross-border market integration cause an increase of both base level and volatility of power flows in the European electrical transmission system. Therefore, it becomes increasingly important to ensure reliable and secure system operation close to admissible limits. A promising approach is the use of dynamic wide-area information, most importantly from timesynchronized Phasor Measurement Units (PMUs), for new monitoring, protection and control applications in order to avoid large-scale system collapses and to increase operational efficiency. The development of such WAMPAC applications needs to take into account the close link to ICT infrastructure that provides the data for all monitoring and decision making processes in power system operation. Nevertheless, the impact of underlying ICT systems is often neglected or modeled highly simplified.

For the evaluation of new control and protection algorithms, simulations are a common way, but both power systems and communication networks are usually analysed using dedicated simulators. Here, a new simulation platform is needed for evaluating the mutual impacts on both networks. This platform needs to handle different types of simulators like the discrete event-based simulation commonly used for the simulation of communication networks as well as discrete time-step-based power system simulation.

In the last few years several approaches have been developed for evaluating the performance impact of communication technologies on monitoring and control of power systems. Here, especially the different types of simulators being used for power systems (discrete time-steps) and communication networks (discrete event-based) pose challenges for engineers. The simulation approaches proposed for solving this problem in the context of smart grids can be categorized as belonging to two fundamental concepts: comprehensive simulation and co-simulation. Both concepts will be detailed in the following. Additionally a generic approach from the field of distributed computing is explained, which can also be applied for generic co-simulation.

A first concept is used in Comprehensive Simulation Environments. This concept is the creation of a new simulation for modeling both power system and communication network in one development environment. For this, the main challenge is the combination of both models in one environment, which leads to an implementation of power system simulation techniques in a communication network environment or vice versa. As an advantage of this approach, there is no need for time synchronization as both models are acting in the same time domain, using the same logical simulation time. This approach has been presented in [A10], introducing an integrated smart grid simulation framework using OMNeT++ as development platform. The focus is set on simulating the electrical distribution system, which has been modeled in MATLAB® and linked into the OMNeT++ simulation. This can constitute a suitable approach to stationary power system analyses such as power
flow calculations but is not easily transferable to dynamic (e.g. electro-mechanical) power system simulations, which are of much higher complexity.

A second concept is used in Co-Simulations. Co-simulating both networks in their specialized simulators is the second approach to enable a combined simulation. Using a co-simulation, the main challenge is to connect, handle and synchronize data objects and interactions between both simulators. Here, especially the implementation of time advance strategies pursued by the discrete event and time based simulators forms the main challenge, which needs to be addressed. As the main advantage of this approach, there is no need for re-implementing given simulation models on both sides.

The Electric Power and Communication Synchronizing Simulator (EPOCHS) [A11] has been the first approach to combine simulators for power system and communication networks in order to provide a simulation environment for analyzing the mutual impact on both networks. Here, the creators connected the two commercial simulators PSLF and PSCAD/EMTDC to the open source Network Simulator 2 (NS2). The connection between the simulators is realized using a Run Time Infrastructure (RTI) based on the High Level Architecture (IEEE 1516-2000). EPOCHS has been designed for investigating the impacts of multi-agent systems in power systems.
An additional approach using co-simulation has been presented in [A12]. Here, the commercial power system simulator PSSTMNetomac was connected to NS2 via an "external bridge" and the Java Native Interface (JNI) . While the first approach of co-simulation has been focused on creating a comprehensive simulation environment by using a time synchronized middleware for handling the interactions between simulators, here both simulators are merged together to perform a joint simulation.
A concept to realize a co-simulation is given in Distributed Computer Simulation Systems. Distributed Computer Simulation Systems have been developed driven by military research combining various approaches from the field of distributed computing to enable a joint simulation training. These approaches resulted in the IEEE Standard 1278 - Distributed Interactive Simulation (DIS) in 1993, the IEEE 1516 - High Level Architecture (HLA) in 2000 and its successor IEEE 1516-2010 - HLA evolved in 2010 [2].

HUA LIN ET AL: "GECO: Global Event-Driven Co-Simulation Framework for Interconnected Power System and Communication Network",IEEE TRANSACTIONS ON SMART GRID, IEEE, USA, vol. 3, no. 3, pages 1444-1456, XP011457941,ISSN: 1949-3053, DOI: 10.1109/TSG.2012.2191805 is an another example of a smart grid simulator.

Comprehensive simulation environments are useful when the models to be imported from the one simulator into the other simulator are simple. For example, load flow calculations may be integrated into a communication network simulator easily, or simple delays in data transmissions may be taken into account in power distribution network simulators easily. However, if more complex models have to be considered, i.e. electro-mechanical models of power generators in power distribution networks, integrating such models is very laborious and you do not have the possibility to use available special simulators that are validated and comprise extensive model libraries. The invention refers to the second type of simulators, so called co-simulators. With regard to the known co-simulator EPOCHS this simulator is used for simulating communication between software agents in the electrical power network. In EPOCHS, there is no consideration of execution components (in IT hardware equipment), no integration of hardware, there are no communication standards available and there is no comprehensive possibility to validate real time ability of applications. However, these aspects, as well as a scenario generation on the basis of standardized network models, are essential for a simulator for evaluation of Smart Grid applications.

Therefore, it is the object of the present invention to provide an integrated, flexible and generic examination platform. In particular, the object of the invention is to provide a co-simulator for hybrid simulation of an electric power distribution network and an associated communication network connected therewith that makes it possible to validate execution and communication components as well as execution and communication processes within the networks.

This object is solved by a method according to claim 1. Advantageous further developments are disclosed in the depending claims.

For such a hybrid simulation architecture, the following design criteria have been designed:
- Generic design: The simulator implementation is generic, thus easily applicable to any new system model.
- Flexibility for module integration: A variety of modules for decision making and simulation purposes, e.g. for further extension, is integrable.
- Observance of standards: It is accounted for industrial standards in order to develop and validate solutions close to practice.
- Computational performance: The simulator is applicable to realistic large-scale systems, thus the design should offer usage of high-performance solutions such as distributed execution.

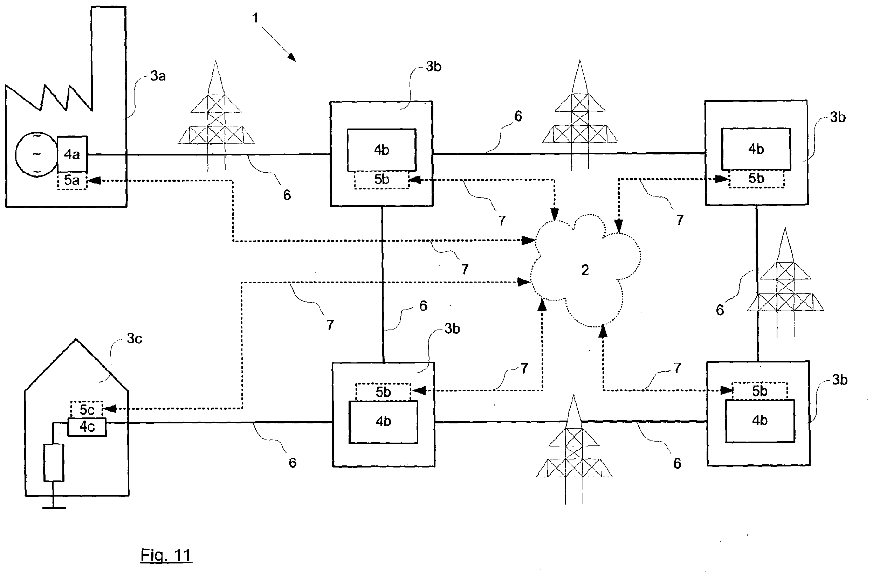

According to the invention it is proposed a computer implemented method for hybrid simulation of an electric power distribution network 1 and an associated communication network 2, 5a, 5b, 5c connected therewith as shown in Fig. 11 for determination of a time delay between an event occurring in the power distribution network 1 or in the communication network 2, 5a, 5b, 5c and a desired effect of a performed measure in the power distribution network 1, the measure having been decided on by means of a decision making algorithm as a reaction on the event, the method comprising the steps of
- electromechanical simulation of the dynamic behavior of the electrical power distribution network 1 in a first simulator by time-discrete numerically calculating a set of algebro-differential equations describing the power distribution network as a model, wherein the simulated power distribution network 1 comprises at least two nodes 3a, 3b, 3c and one power transmission line 6 there between, each of the nodes 3a, 3b, 3c being described by at least a part of the set of algebro-differential equations, one of the nodes 3a corresponding to a generator and one of the nodes 3c corresponding to a load,
- simulating in a second simulator event triggered, protocol based transmissions of messages within the communication network 2, 5a, 5b, 5c from a first communication unit 5b over a transmission medium 7 to a second communication unit 5a, 5c, each of the communication units 5a, 5b, 5c being associated to one of the nodes 3a, 3b, 3c of the power distribution network 1,
- executing on a first processing unit 4b the decision making algorithm, said first processing unit 4b being associated to one of the nodes 3b of the power distribution network 1,
- performing on the first or a second processing unit 4a, 4c the measure that was decided on by means of the decision making algorithm in reaction to the event, said second processing unit 4a, 4c being associated to the other or another node 3a, 3c of the power distribution network 1,
- coordinating the first and the second simulator and the first and the second processing unit 4a, 4b, 4c by time-synchronous data delivery by means of a superior, central controlling instance,
wherein the first simulator, the second simulator, at least one of the first and second processing unit 4a, 4b, 4c, and the controlling instance, running separately in its own process, preferably on its own processor, in particular on a separate computer system, wherein the first simulator, the second simulator and at least one of the processing units having its own local simulation time and the controlling instance having a global simulation time, and that the following steps are performed:
a the first simulator calculates in discrete time steps status values describing the status of the power distribution network 1, said status values are made available to the controlling instance and at least to the first processing unit 4b at a first point of time t₀,
b in the first processing unit 4b the decision making algorithm is triggered by the event and is executed using the current state values, wherein a processing time T_{ALGO} is determined the algorithm needs to make a decision on how to react to the event,
c the global simulation time is set to a second point of time t₁ = t₀ + T_{ALGO} by adding the processing time T_{ALGO} to the first point of time t₀, wherein the controlling instance controls the first and the second simulator in that their local simulation times do not overrun the second point of time t₁,
d depending on the measure, a communication message is generated by the first processing unit 4b to be transmitted to a target processing unit 4a, 4c, said message comprising an information about the measure on which the decision making algorithm has decided and an information about a target node 3a, 3b, 3c at which the measure is to be performed, wherein the target node 3a, 3b, 3c is the first node 3b or the second node 3a, 3c,
e a data size of the communication message is calculated,
f associating a time stamp of the second point of time t₁ to the communication message, and conveying the message to the second simulator by means of the controlling instance,
g the second simulator determines the transmission time T_{K} needed for the transmission of the message from the first communication unit 5b of the first node 3b to a target communication unit 5a, 5b, 5c of the target node 3a, 3b, 3c,
h the global simulation time is set to a third point of time t₂ = t₁ + T_{K} by adding the transmission time T_{K} to the second point of time t₁, wherein the controlling instance controls the first simulator in that its local simulation time does not overrun the third point of time t₂,
i the controlling instance, based on the information about the target node 3a, 3b, 3c and the information about the measure, initiates at a target processing unit 4a, 4b, 4c associated with the target node 3a, 3b, 3c to execute the measure at the third point of time t₂,
j the target processing unit 4a, 4b, 4c evaluates the measure by requesting a database to provide the duration T_{ACTION} needed to execute the measure in reality, and the target processing unit 4a, 4b, 4c executes the measure by updating one or more status values at a fourth point of time t₃ = t₂ + T_{ACTION} obtained by adding the duration T_{ACTION} to the third point of time, and thereinafter
k the first simulator calculates new status values considering the current status values that have been updated by the second processing unit 5a, 5b, 5c, as soon as its local simulation time overruns the fourth point of time t₃.

The proposed hybrid simulator architecture will establish an environment for investigating various power system management and protection algorithms. Therefore, it is kept generic and extensible for future developments in different areas of research in the context of smart grids. "Hybrid" in the meaning of this invention refers to the integration of two main simulators in one common simulator architecture, including processing units for event recognition and for execution of measures as reaction on an event in the power distribution network that is all centrally controlled by means of the controlling instance.

According to the invention, the term "event", refers to any incident that may occur in the electric power distribution network or in the communication network. Basically, it refers to an external incident that is not triggered by an algorithm in one of the simulations nor any other pro-configured portion of a scenario to be investigated. For example, an event can be a short current or a breakdown of a transmission line, e.g. due to a tree having fallen on said line. Alternatively, an event can be the action decided on by the decision making algorithm, e.g. switching off a power transmission line because there was an overcurrent on said line for a predetermined time.

The electric power distribution network can comprise two or more nodes, in particular a plurality of network nodes, the nodes being connected with one another via at least one transmission line. Each node can correspond to one of the following, a generator, a load, a busbar, a transformer, a switch or switching station in particular a power switch, a power plant, or a combination of two or more of these units, e.g. a substation comprising at least a busbar, a transformer and a switch. This means that in the first simulator, each physical node is represented by a model, and its dynamic behavior is described by at least one equation that is part of the set of algebro-differential equations. In the first simulator the models are together simulated by a continuous time-discrete calculation of the set of algebro-differential equations, i.e. the model of the generator, the transformer, the busbar, the load, the substation, the switching station, and / or the power plant.

With regard to the node corresponding to a generator, a electromechanical model is used. The generator model can comprise a voltage controller, a turbine controller and/ or a power system stabilizer. For other nodes, e.g. a simple load, a mere electrical model is sufficient. For a transformer an electromechanical model can be used as well. With respect to the power transmission line, said line can physically be an AC or DC power transmission line, in particular for 60 kV, 110 kV, 220 kV, 380 kV, 400kV, 500 kV, 700 kV, or 1150 kV. The power transmission line is considered as sub-model as well.

Thus, the overall model that is simulated in the first simulator consists of interconnected simulated sub-models that altogether form the set of algebro-differential equations. Each sub-model has all information about the physical entity the node or the transmission line represents, needed to describe the dynamic behavior of the physical entity. Thus, with the help of all sub-models in the overall model in the first simulator, the dynamic behavior of the electrical power distribution network can be simulated. With other words, the sub-models of the nodes altogether form the model describing the behavior of the power distribution network. This model is described by means of a set of algebro-differential equations. "Algebro" in this context means that this set of equations comprises algebraic equations and differential equations. Said equations represent dependencies of the state values with each other the current values of which express the current status of the power distribution network. Calculation of the equations is performed time-step based, i.e. the model equations are repeatedly calculated numerically in discrete time steps, thus the status values are updated each time step.

Physically, the communication network exists parallel to the power distribution network as a completely independent working system. However, its structure may depend on the structure of the electric power distribution network. For example, the communication network can be a Wide Area Network (WAN) like the public internet (World Wide Web). The network comprises communication units each of which is associated with one network node. Thus, the amount of communication units is equal to the amount of nodes of the power distribution network. The communication network can consist of a computer or messaging server with a user interface and additional communication components, e.g. routers, switches and gateways. The communication units are connected with each other by means of a transmission medium. Said transmission medium can be a copper cable or fiber glass cable thus establishing the communication network as a wired landline network. Alternatively it can be a radio transmission over the air, thus establishing the communication network as a mobile radio network. In another alternative the communication network can consist of a combination of these types of transmission media. This is advantageous in order to select that transmission medium which is the fastest, cheapest and/ or most reliable for a message transmission. For example, if a short current occurs in the power network which is an event according to the invention, a message about this event has to be sent to a target node, i.e. to a target communication unit associated with this target node. This message may have high priority as this event needs immediate action. The message needs a fast and reliable transmission medium in contrast to a message that simply contains measurement data. However, transmitting measurement data may need a fast and reliably transmission medium in some cases as well.

As previously described, each node is associated with a communication unit so that it can send and / or receive communication messages. The first communication unit is associated with the first node, the second communication unit is associated with the second node and the target communication unit is associated with the target node. As the target node is the first or second node, the target communication unit is the first or second communication unit respectively. Consequently, the electrical power distribution network and the communication network are connected somehow.

The transmission of the message from one communication unit to the other naturally takes time. This leads to a time delay. Another time delay is generally involved in every protection mechanism and protection algorithm till the event is firstly recognized, secondly analyzed and thirdly evaluated, the latter comprising the step of deciding which measure is appropriate to react on the event. For example, a short circuit can be detected by a current exceeding a defined limit, an analysis can then be performed to identify the event, the place where the high current occurred and / or which values other status parameters have. The decision making algorithm decides on the measure to be performed. Several measures can be predefined and, thus, are available for the decision making algorithm. Finally, performing the measure at a target node by means of a controlling mechanism and controlling algorithm, i.e. cutting off a power transmission line from the network, needs time as well.

All these steps lead to an accumulated time delay between the event occurring in the power distribution network and a desired effect of the performed measure in the power distribution network. With the present invention this time delay can be determined for every protection and/ or controlling algorithm.

As the given example shows, the transmission of a message over the communication network is event triggered. A message is sent only if and when an event occurs.

A node of the power distribution network may need to be controlled and/ or protected. Thus, a controlling and/ or protecting means belonging to the secondary equipment of a power network node can be present at this node, in general comprising hardware (controlling and/ or protecting mechanisms) and software (controlling and/ or protecting algorithms). Such means can form an integral part of the node (e.g. controller of a generator or motor, circuit breaker in a sub-station), or it can functionally be connected to the node (e.g. over current protection before a load). Thus, these means are considered as associated to a node in the following.

According to the invention, at least two nodes are associated with a processing unit. The processing unit is for local data processing at a node's side. It can be connected to one or more sensors delivering measurement values and/ or it can be connected to an actor which is controlled by the processing unit. For example, one or each one of the processing units comprises simulated measuring equipment, protective equipment and/ or controlling equipment.

A processing unit is associated with and may in reality be physically connected to a communication unit so that a processing unit can send and receive messages to and from other processing units of other nodes of the power distribution network. Thus, you can see that a power network entity, for example a phase shifting transformer, consists of the electric hardware (the transformer for transforming a voltage) on one hand, and, on the other hand, a processing unit (unit for measuring and setting phase shift) and a communication unit (receiving instructions for setting the phase shift, sending measurement values).

A protection algorithm, a control algorithm, a measurement data processing algorithm, or a combination of said algorithms in order to protect and/ or control a node of the power distribution network can be executed in a processing unit. In an alternative an algorithm can be executed partly in one processing unit and partly in another processing unit.

An event occurring in the power distribution network can be recognized by a protection algorithm, for example on the basis of at least one measured status value of the power distribution network. Within the simulation, said parameter measurement corresponds to the surveillance of the calculated status values. Said protection algorithm can comprise the decision making algorithm. The algorithm evaluates the event on the basis of the status values and decides on which measure is at best be performed to counteract to the event.

The measure is an action to be performed in a node. This node can be the same node in which the event occurred, or it can be another node. Said action is performed by the processing unit associated with that node (target node) in which the effect of the action shall result. This corresponds to a controlling of said node, so that in this embodiment the algorithm has a protecting as well as a controlling aspect. However, in another embodiment an algorithm running on the first processing unit can be a mere protection algorithm or a mere control algorithm, and an algorithm running on the second processing unit can also be a mere protection algorithm or a mere control algorithm.

For example, the measure or action can be a switching of a power switch, in particular switching power off. Within the simulation, this is performed by means of the second processing unit changing a status value indicating the status of the switch, i.e. from the value "1" (switch closed, power turned on) to "0" (switch open, power turned off). Thus, the second processing unit can access and update certain status values of the first simulator, at least those status values that are associated with actors. Another measure to be performed can be data measurement at a specific node.

Coordinating the first and the second simulator and the first and the second processing unit is performed by means of the superior, central controlling instance. The controlling instance provides time-synchronous data delivery to the first and the second simulator and the first and the second processing unit. It enables the combined simulation of power systems and communication networks in an integrated simulation environment.

The controlling instance combines the hybrid simulator architecture along with the communication and synchronization process between sub-simulators of the nodes and simulated processes for controlling and protecting in the processing units. It administers time synchronicity and data synchronization. The controlling instance can be realized by a IEEE standard 1516 - High Level Architecture (HLA) [A2], its core element is a Run-Time Infrastructure. The HLA it is the latest development in this area of research and provides a general, object-oriented approach for realizing a synchronized and distributed simulation environment.

A distributed simulation using HLA is based on the following components: a Run Time Infrastructure (RTI) serving as a central administration instance, the simulators (called federates in context of the HLA), the HLA rules defining and describing the interactions of the federates, interface specifications (called ambassadors) to federates and the RTI, a standardized Object Model Template (OMT) and the customized Federation Object Model (FOM) for the overall simulation, also called federation.

The given hybrid simulator architecture has been developed within the German Research Foundation (DFG) research unit FOR1511 "Protection and control systems for reliable and secure operation of electrical transmission systems" at TU Dortmund University. Within this unit, new protection and control algorithms, emerging from interdisciplinary research from electrical engineering, information technology, statistics and computer sciences will be developed and analyzed with respect to their real-time capability. For evaluation, focus is set on both new algorithms for protection and control as well as detailed representation of ICT infrastructure. A particular challenge constitutes the combined analysis of discrete time based (with regard to the power systems) and event based (with regard to the information and communication technologies) simulations, which is addressed in this invention.

A core idea of the invention is to run the first simulator, the second simulator, both the first and second processing unit together, and the controlling instance, separately in its own process, preferably on its own processor, in particular on a separate computer system. Thus, four such processors, in particular four computer systems can be used. Alternatively, one computer system comprising a quad core processor can be used. The first and second processing unit run together on the same processor, in particular on the same computer system. However, it is also possible that the first and second processing unit run separately, i.e. in separate processes, on separate processors, in particular separate computer systems. The processors or computer systems are connected with each other, in particular via a local area network.

Using different processors, in particular different computer systems, results in that each simulator, at least one processing unit and the controlling instance having its own simulation time. Simulation time of the controlling instance is defined as a global simulation time, whereas simulation time of the first and second simulator as well as of the processing units is defined as local simulation time.

This configuration of the simulation environment anticipated, the method according to the invention firstly calculates in the first simulator in discrete time steps status values describing the current dynamic status of the power distribution network. The status values correspond to measurement values of physical parameters used in the model and/ or in the sub-models to mathematically describe the power distribution network. Calculating the status values by solving the set of equations is performed repeatedly in given intervals (whenever the local simulation time of the first simulator is advanced) as long as the controlling instance has not stopped the simulation.

Possible status values representing physical values are, for example:
- the instantaneous active power, e.g. transmitted via an AC transmission line, a DC line, consumed by a load, generated by a generator, transferred by a main transformer, coupling transformer or phase shifting transformer, or measured by a power flow controller;
- the instantaneous reactive power, e.g. transmitted via an AC transmission line, a DC line, consumed by a load, generated by a generator, transferred by a main transformer, coupling transformer or phase shifting transformer, or measured by a power flow controller;
- the instantaneous apparent power, e.g. transmitted via an AC transmission line, a DC line, consumed by a load, generated by a generator, transferred by a main transformer, coupling transformer or phase shifting transformer, or measured by a power flow controller;
- the instantaneous current flowing on an AC or DC transmission line or measured by a power flow controller;
- the degree of capacity utilization of an AC or DC transmission line, a generator, main transformer, coupling transformer or phase shifting transformer, or power flow controller;
- positions of switches in a power switch, a main transformer, coupling transformer or a phase shifting transformer, or in a power flow controller;
- voltage magnitude
- voltage phase
- speed of the generator;

Possible status values representing set values as input parameters are, for example:
- active power change set value for a power flow controller, a generator, a DC transmission line or a load;
- reactive power change set value for a power flow controller, a generator, an DC transmission line or a load;
- voltage change set value for a generator or an DC transmission line;
- new switching position for a switch of a power switch, or coupling
- a tap position of a main transformer, a coupling transformer or a phase shifting transformer.

After having been calculated, the status values are made available to the controlling instance and at least certain of said status values are made available at least to the first processing unit, and preferably, to the second processing unit, especially to other processing units as well. In one embodiment, a global database can be used in which the first simulator stores the status values. This database enables other entities, e.g. the controlling instance, the first or second processing unit, to access the current state values in the global database.

In another embodiment, the status values are only locally available in the first simulator and an external server, in particular an OPC (OLE for Process Control) server, fetches the status values from the first simulator and actively provides or conveys them to one or more of the processing units and/ or the controlling instance. In this embodiment, the other entities are informed about updated status values as soon as they have been calculated and/ or updated. If a server, in particular an OPC server, is used, the first simulator comprises a corresponding interface, in particular an OPC interface to enable the OPC server to access the local status values.

The time at which the status values are available, i.e. calculated or updated, is considered as a first point of time t₀. Thus, at this first point time, at least the first processing unit has an amount of information. Said amount comprises at least some of the global status values calculated by the first simulator. Additionally, the amount of information can comprise that information received by way of communication with other entities, i.e. with other processing units. Furthermore, alternatively or in addition, the amount of information can comprise internal data that was produced by internal evaluation, calculation or execution processes. In another aspect, the amount of information can further comprise a history of the global status values, a history of data received by way of communication, and a history of the internal data. The first processing unit executes the decision making algorithm and/ or other algorithms preferably on the basis of this information amount.

In the first processing unit an amount of information, in particular the updated status values, are monitored and checked as to whether an event occurs, e.g. an over current or a short current. If this is the case, the decision making algorithm is triggered by the event and is executed using the current state values. A processing time T_{ALGO} is determined the algorithm needs to make a decision on how to react to the event. This can be performed by counting the flops the processor needs to completely execute the algorithm, and converting the flops into a time. The processing time is used for the next time advance of the local simulation time in order to apply the delay to the simulation.

The measure on which the algorithm has decided is defined by a specific action performed in a target node. The specific action can be the opening of a circuit breaker, reduction of power delivery on a specific power transmission line or any other action mentioned above. In particular the measure not only comprises the action to be performed in the target node but also the information as to whether a communication with another processing unit has to be initiated. In some cases the action has to be performed in the same node in which the decision was made. Thus, the target node can be the first node, the second node or any other node of the power distribution network.

During the algorithm is executed the first simulator continues to calculate the status values and its local simulation time proceeds. The global simulation time of the controlling instance is set to a second point of time t₁ = t₀ + T_{ALGO} by adding the processing time T_{ALGO} to the first point of time t₀.

For the following method steps two cases have to be distinguished from the two simulators point of view. Either the second point of time t₁ is far in the future, i.e. the local simulation times are in the past in comparison with to the advanced global simulation time, or the second point of time t₁ is in the past of the local simulation time of the first or second simulator. The controlling instance now controls the first and the second simulator in that their local simulation times do not overrun the second point of time t₁. This ensures that the time causality is not affected.

In one embodiment, referring to the first case, the local simulation times are advanced to the second point of time t₁. This is done if there is meanwhile no incident. It has to be noted that, in the interim, the system status is evaluated repeatedly by means of the processing units. E.g. measurement values are transmitted, and it may be that there is a decision made somewhere.

In another embodiment, referring to the second case, the first and/or second simulator is stopped, i.e. its simulation time is hold as to prevent the respective simulation time to overrun the second point of time. This is done because the calculations in other simulators are not completed yet.

Holding the local simulation time must be performed right before the second point of time t₁. As the second simulator is event discrete, the simulation time must be stopped at the time stamp of the previous event. This could be very early to the second point of time t₁. Preferably, it is performed directly before an event in the first simulator is detected, or when the decision making algorithm has been started, or shortly after this start. When the second point of time t₁ has then been calculated and is in the future in comparison with the stopped local simulation time, and calculating the equations of the model of the power distribution network has not been completed yet, the first simulator will be continued until calculation of the equation is completed. After that, the local simulation time of the first and/ or second simulator can be advanced to the second point of time t₁.

After the second point of time is determined, the first processing unit generates a message comprising information about the measure on which the decision making algorithm has decided, and comprising information about a target node at which the measure is to be performed. Said message is to be sent to a target communication unit associated with the target node. In some cases the action has to be performed in the same node as the event has occurred. Thus, there is no need to send a message to another node. However, communication can take place within this node as well, namely an internal communication. In this case the message is considered being internally sent within the first node.

It is now of interest how long the message will take to arrive at the target node. For this, the data size of the message is calculated. As the communication is performed protocol based, the total number of Bits, Bytes, frames or another unit can be used as data size of the message.

Additionally, a time stamp is associated with the message, and the time stamp corresponds to the second point of time t₁. The time stamp is used to evaluate the end-to-end delay. Then, the message is conveyed to the second simulator by means of the controlling instance.

Having received the message, the second simulator determines the transmission time T_{K} needed for the transmission of the message from the first communication unit of the first node to a target communication unit of the target node. As described above, the target node can be the first node, the second node or any other node of the power distribution network. Consequently, the target communication unit can be the first communication unit, the second communication unit or any other communication unit of the communication network.

Determining of the transmission time T_{K} is performed on the basis of the model representing the communication network, in particular the communication units and the transmission medium (optical fiber, metal cable or radio link). The second simulator takes into account data transfer rate, attenuation, data loss, data delay (jitter), capacity saturation and/ or bandwidth of the transmission medium.

Preferably, the transmission time T_{K} is considered comprising three portions. A first time-portion for preparing the message for data transmission in the sending first communication unit, a second time-portion for preparing the message for processing in the receiving second communication unit, and a third time-portion for transmitting the message via the transmission medium.

With respect to the first and second time-portion of the transmission time T_{K}, these portions can be determined by calculating status models of the sending first communication unit and the receiving second communication unit. With respect to the third time-portion of the transmission time T_{K}, this portion can be determined by calculating an analytic and/ or stochastic channel model of the transmission medium.

For the first and the second communication unit, and the target communication unit respectively, a layered model can be used in order to determine the first and second time-portion of the transmission time T_{K}. For example, the so called OSI (Open System Interconnection Reference Model) model can be used. This model can describe a communication unit as comprising up to seven layers lying hierarchically over each other, one layer serving the layer above and being served by the layer below. However, not every layer must be present. In the layered models, each layer is associated with a specific protocol for data transmission, so that each layer of a communication unit can only communicate with the layer of the same hierarchical level of the other communication unit. Within a communication unit only neighbored layers can communicate.

Due to the specific protocols of the individual layers, the transmission of the message from one layer of the sending first communication unit to another layer of the receiving target communication unit is performed by protocol-specific encapsulation of the message on the sender side and decapsulation of the message on the receiver side. Encapsulation in this context means that a protocol header, and optionally a footer, is added to the message. In particular, an encapsulation step is performed for every layer of the model representing the first communication unit and a decapsulation step is performed for every layer of the model representing the target communication unit. Taking this into account, a specific duration T_{Ki}, i = 1 ... n, can be assumed for each encapsulation step and each decapsulation step, said durations T_{Ki} summed up determine the first and second time-portion. Thus, transmission time T_{K} is given by T_{K} = T_{K1} + T_{K1} + T_{K1} + ... T_{Kn}.

Preferably, the second simulator calculates in discrete time steps the duration of each step of encapsulation and decapsulation. For example, this can be done by using state transition systems as models for the communication units.

Although each transmission time T_{Kx}, x = 1 ... n, will be carried out in local simulation time steps (which will be synchronized to the global simulation time of the controlling instance), only T_{K} is relevant for the first simulator.

The global simulation time is then set to a third point of time t₂ = t₁ + T_{K} by adding the transmission time T_{K} to the second point of time t₁. Again the controlling instance controls the first and / or the second simulator in that its local simulation times do not overrun the third point of time t₂.
As described with regard to the second point of time t₁, the local simulation times of the first and second simulator can be controlled identically in relation to the third point of time. Thus, the local simulation times are advanced to the third point of time t₂, when the third point of time t₂ is in the future of the current local simulation time. On the other hand, the first and/ or second simulator is stopped, i.e. its simulation time is hold as to prevent the respective simulation time to overrun the third point of time.

Preferably, this is performed directly after the measure has been decided on, or when the decision making algorithm has been completed, when the calculation of the data size of the message is made. When the third point of time t₁ has then been calculated and is in the future in comparison with the local stopped simulation time, and calculating the equations of the model of the power distribution network has not been completed yet, the first simulator will be resumed until calculation of the equations is completed. After that, the local simulation time of the first and / or second simulator can be advanced to the third point of time t₂.

The message is then analyzed by the controlling instance with respect to the kind of measure (open a switch, taking measurements, reduce power,...) and with respect to the target node in which the measure has to be made.

The controlling instance, based on the information about the target node and the information about the measure, delivers to and initiates at a target processing unit associated with the target node to execute the measure at the third point of time t₂. As the target node is the first node, the second node or any other node of the power distribution network, the target processing unit is the first processing unit, the second processing unit or the processing unit of another node to which it is associated.

Executing the measure at the third point of time t₂ means that this execution is performed immediately after the message would in reality have been provided to the target processing unit from the target communication unit. Thus, execution of the measure begins when the local simulation time of the target processing unit reached the third point of time t₂. Alternatively, the local simulation time is set to the third point of time t₂.

For execution, the target processing unit analyzes the measures to be performed on her side as well with respect to the action to be taken as defined in the measure. In particular, the target processing unit evaluates the measure with regard to its execution time T_{ACTION}, i.e. the duration needed to completely execute the action in reality, e.g the change of a transformer tap-position can take several seconds due to supportive mechanical processes.. Preferably, a database containing execution times for each possible measure the decision making algorithm can decide on, is used. This database can be queried, and in return it provides the duration T_{ACTION}. Alternatively, the execution process (like the supportive mechanical processes for changing a transformer tap) of the measure can be modeled in detail as part of the models in the first simulator.

The target processing unit then executes the measure virtually. This means the following:
In reality the measure can be, for example, turning a switch, reducing power for a specified amount, initiating a measurement or changing the setpoint of a controller. Performing said action naturally needs time.

On the other hand, performing the measure in the simulated processing unit merely corresponds to the change of one or more status values. For example, virtual execution of the measure can be done by changing one status value representing a switch that enables or disables power flow into a transmission line. Changing this status value would have the meaning of opening the switch. If the target processing unit comprises simulated protective equipment and/ or controlling equipment, e.g. a power flow controller, the model describing this equipment, e.g. this power controller, can be calculated.

In order to consider the real time duration of the measure, updating the one or more status values is performed at a fourth point of time t₃ = t₂ + T_{ACTION} obtained by adding the execution time T_{ACTION} to the third point of time t₂.

Thereinafter the first simulator calculates new status values considering the status values updated by the target processing unit. It might be that the fourth point of time t₃ is in between two regular time steps t_{E_i} and t_{E_i+1}. Thus, the new status values are calculated as soon as the local simulation time overruns the fourth point of time t₃. Then the method according to the invention can be repeated with step "a", so that long simulation times are possible.

At this point, every essential entity of the co-simulation architecture has been executed at least once, and the simulation results can be analyzed as to whether the tested decision making algorithm being part of a protection and control algorithm works good or not, i.e. works successful according to a specific criteria.

Data exchange between the entities of the co-simulator, i.e. between the first simulator and the controlling instance, the second simulator and the controlling instance, the processing units and the controlling instance and the communication units and the controlling instance, can be performed by means of the controlling instance. Data exchange in this context refers to updating and/ or providing status values as well as providing the processing time T_{ALGO}, transmission time T_{K}, execution time T_{ACTION}, the communication message and the data size of the communication message to that respective entity who needs it.

In a preferred embodiment the models for simulating the electrical power distribution network, and its nodes/ components respectively, can be generated automatically by means of a model generator. In particular, the models are generated on the basis of the Common Information Model (CIM) according to the standard IEC 61970 (IEC International Electrotechnical Commission).

The CIM can be used for setting up models for logical local entities on substation level or field level of the power distribution network. Thus, the nodes as well as the processing units can be modeled by means of the CIM. The CIM can also be used for setting up models for local entities of the communication network, i.e. for the communication units.

The Common Information Model provides a flexible and extensible model description, said model description can be generated based on the given power system topology description mapping the physical entities (the nodes) of the power distribution network to an IEC 61850 based model.

For this purpose, the concept of a Substation Data Processing Unit is introduced, which represents entities on substation level by providing an IEC 61850 [A3] based model for mapping logical functions for local process control, implementing decentralized protection and control algorithms and providing additional components for the power systems (e.g Phasor Measurement Units (PMUs) [A4]). Each of the first and the second processing unit can be such a SSDPU. A SSDPU can contain the modeled hardware for the corresponding local process control and/ or logical methods for decentralized protection, as well as software, i.e. a protection and/ or control algorithm.

The processing units (SSDPUs) can preferably be mapped to the power system simulator using OLE for Process Control (OPC) [A9]. Furthermore, they can be mapped to the communication network simulator using the controlling instance.

The communication network is modeled so as to analyze traffic caused by the information transmitted by control and protection algorithms executed in the data processing units of the electrical transmission system. Preferably, the communication network is as well modeled by the Common Information Model (CIM) as defined in IEC 61970 ([A7], [A8]) and in IEC 61850 for describing the communication between power system elements, i.e. between the first communication unit of the first node and the target communication unit of the target node.

The interfaces to the central controlling instance as part of the co-simulator can in particular be programmed in JAVA-/ C++. The interface to the first simulator can be realized with the help of the OPC interface. Furthermore, these interfaces can be used, e.g., to connect further sub-simulators to the central controlling instance. A sub-simulator in this context can be an executable model of every device in or connected to the power distribution network that is not already considered in the first simulator. For example, a processing unit may be described by means of a sub-simulator. The controller can further provide a central programming interface to connect external decision making processes to the co- simulator, in particular to the central controlling instance. Moreover, the controller can associate the logical objects of the CIM model with data structures based on IEC 61850.

The co-simulator can further comprise a central scenario configurator to describe an overall simulation scenario on the basis of the Common Information Model (IEC 61970). This means that common scenarios can be generated for power transmission network and communication network.

The co-simulator performing the computer implemented method according to the invention can be initialized as follows:
Initialization begins with partitioning an overall model of a given overall system structure for simulating a desired scenario into individual sub-models for the entities corresponding to the system components, said individual models being distributed executable, i.e. on different processors, in particular computer systems.

Said overall model of the system structure is given by defining how many entities and what kind of entities is present in the power distribution network and in the communication network, i.e. how many nodes, processing units, communication units, power transmission lines and communication transmission media, and what kind of nodes (generator, active or reactive load, active or reactive power controller, switching center, energy converter, batteries, etc.), processing units (protection algorithm, control algorithm, combined protection and control algorithm), communication units (router, repeater, hub, gateway), power transmission lines (AC or DC, 110kV, 220 kV, 380 kV, 400kV, 500 kV, 700 kV, 1150 kV, etc.) and communication transmission media (copper cable, optical cable, GSM, UMTS, LTE).

Even the overall model can be described by the Common Information Model (IEC 61970). The overall model is analyzed and firstly partitioned into sub-models, each sub-model corresponding to an entity of the station level or field level of the power distribution network, i.e. corresponding to specific network node. Afterwards, the generated sub-models of the network nodes of the CIM model, e.g. sub-stations, are mapped to IEC 61850 based data structures. In a next step, these data structures are used to connect the interface of a node with the corresponding simulator.

After that, the generated data structures (local instances of the previously defined sub models) are associated to HLA object instances (synchronized data objects within the HLA federation) of the second simulator by means of an instantiation with the help of the HLA object model (template for describing the HLA object instances) and assignment of the corresponding OPC elements (data elements taken from the first simulator and stored within the OPC server).
Thus, at this point of time the processing units are considered as software instances. These processing units are called Substation Data Processing Units (SSDPU) in the following, as they represent the secondary equipment of the nodes, i.e. the substations, of the power distribution network. The software instances, i.e. the processing units, follow the data structures of IEC 61850. Furthermore, the software instances are connected to the first simulator for the power distribution network, and to the second simulator for the communication network. Both the first and the second simulator are based on the same overall model.

Further software instances, i.e. further processing units, can be generated that can be set in interaction with the other entities. A further processing unit may be that of a power plant. So, if another processing unit is present, there will normally be present another network node as well, because each processing unit is associated with a network node. The interaction between the further processing unit and the other entities within the co-simulator can be realized for example by enabling the further processing unit to change status values and/ or to send or receive messages. A further processing unit can be programmed with additional functions, for example, with an intelligent external decision making algorithm on the station level or on control center level.

The central controlling instance (the HLA) guarantees in this context a time synchronous execution of all entities of the co-simulator. This can be ensured by using common time advancing strategies, using a common object model and/ or defining common interaction.

Finally, in the initialization phase the central control instance is configured, the control instance coordinates communication between the individual entities of the co-simulator and processes events, messages and measures time synchronously.

The first simulator simulating the electrical power distribution network uses a certain minimal step size. This minimal step size depends on the desired degree of exactness for calculating the set of algebro-differential equations describing the power distribution network model. This degree of exactness can be specified manually in advance, e.g. by specifying the number of decimal places to be used. Furthermore, the minimal step size can roughly be specified in advance as well. For example, 1ms could be a step size. The first simulator then calculates for every time step the step size around the desired step size to reach the desired degree of exactness. Elaborating the given example, for having an average time step of 1ms, the simulator will use a time step size of, for example, 0,978ms, 0,99ms, 1,037ms, 1,1ms, etc. However, the time step size is not necessarily chosen in that it has a mean value of 1ms. It can fluctuate simply because of the calculating algorithm for calculating the set of algebro-differential system. Thus, during the simulation step size can change dynamically for every next time step.

In contrast to the first simulator, the minimal step size in the second simulator simulating the communication network can have any value as it is triggered event-based. In the processing instances the minimal step size can also have any value.

Further features, aspects and technical effects of the method according to the invention are describes in the following with regard to advantageous embodiments and the figures enclosed. The figures show:
Fig. 1: Hybrid Simulator Architecture
Fig. 2: Integration Concept for ICT and Power Systems
Fig. 3: Substation Unit for Coupling of Simulators
Fig. 4: Message Flow of Co-Simulation
Fig. 5: Overview on core components of power system operation connected via smart grid
Fig. 6: Hybrid Simulator components and interfaces
Fig. 7: Overview on accounting for relevant times in the hybrid simulation architecture
Fig. 8: Test network (New England Test System)
Fig. 9: Loading of controlled line, PST tap positions, and time components of real time response of the control system
Fig. 10: Network traffic
Fig. 11: Overview on overall simulated network structure

### First Embodiment

### HYBRID SIMULATION ARCHITECTURE

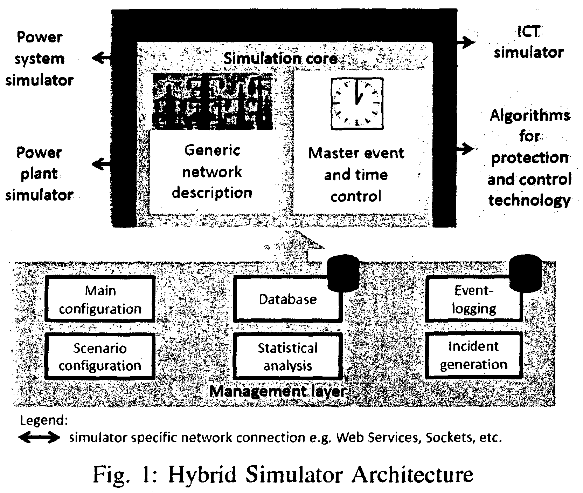

In the following the hybrid simulation structure of the co-simulator as shown in Figure 1 is explained in detail. Here, the mapping of a power system driven scenario generation and the given ICT infrastructures for power systems control and protection is described at first. Then, the relevant heterogeneous simulators are described, followed by their integration concepts, introducing the modeling approach for mapping entities between power system and communication network simulation.

To describe the generic architecture, functionalities can be divided into three major modules, which consist of the simulation core, the networking layer and the management layer. The individual functionalities of the modules will be described in detail in the upcoming subsections.

### A. Simulation Core

The simulation core is realized in the central controlling instance. It provides the master event and time control for synchronizing the sub-simulators along with the generic network description, providing the overall network and scenario topology. For the master event and time synchronization the HLA is used, providing time management services for enabling the sub-simulators to control their logical time synchronized with the other sub-simulators in the federation [A13]. At this, advancing the simulators logical time and keeping synchronicity within the sub-simulator is guaranteed, using a conservative synchronization algorithm. The second functionality provided is the generic network description. As the hybrid simulator architecture is driven by the power system, a topology export of the power system provided as a CIM model will be used to describe the connectivity in the electrical network.

### B. Networking Layer

The networking layer provides the connectivity to the subsimulators, taking into account various network protocols to enable a generic interaction with third party software tools and simulators. Considering the HLA based simulation core, proprietary sockets as well as standardized web services connections are available for realizing the connectivity to the subsimulators. For communication, an eventing service for other sub-simulators is provided, transmitting attribute updates as well as interaction request and responses taking into account the HLA object models and transportation services.

### C. Management Layer

The management layer provides comprehensive functionalities for the combined simulation environment. Here, different modules are available to manage and operate the hybrid simulator regardless of the affected sub-simulator. As each module provides a different functionality, they are described separately as follows:
- Main configuration
   The main configuration provides the ability to configure the sub-simulators in order to connect the simulation core. Regarding the HLA based simulation core, additional configuration settings for the RTI and sub-simulators can be adjusted.
- Scenario configuration
   The scenario configuration is given by the generic network description (cf. Section III-A) and includes additional information for the ICT topology converter. Here, especially the investigated communication technologies are specified for automatic scenario conversion.
- Database
   A database is used to store scenario and main simulation configurations as well as the event log created during a simulation run. This functionality will be used for either later analysis or managing default configurations.
- Statistical analysis
   For live analysis, the management layer is extended by additional statistical analysis methods. Comparing the analysis federates in Section V, the focus here is set on live analysis during the simulation run and the provision of real-time reports. The information of each simulator is reported and displayed either in a separate report or as part of an overall summary, using the event log.
- Event logging
   The event logging enables the comprehensive simulations to log events occurred in the simulation. Interactions as well as attribute updates are recorded and stored in the database for post-simulation analysis.
- Incident generation
   The incident generator provides the ability to generate a single or a sequence of events during a simulation run. Failures both in the power system, e.g. failures of transmission lines, and the communication network can be scheduled for later execution in here. Additionally, the failure description is kept generic, as failures can have a mutual effect and can effect multiple simulators, e.g. failures on the transmission lines can also affect the communication links situated along the line.

### COMMUNICATION ARCHITECTURE MODEL

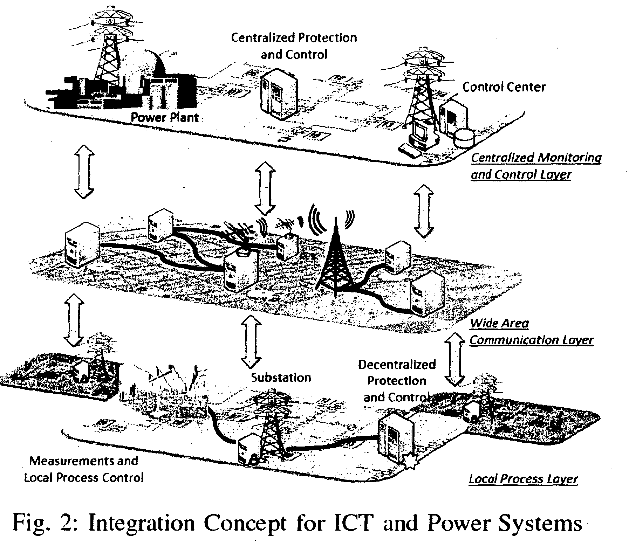

This section introduces the communication architecture model for the power system based on the topology of the electrical transmission grid. Here, especially the ENTSOE-E 2009 profile for the CIM Model is a common description language for the power system topology. As nowadays different approaches for harmonization of CIM and IEC 61850 are discussed [A14], this architecture will benefit from ongoing research by using ontology matching approaches for converting the CIM based grid description in the IEC 61850 based model description stored in the SSDPU. For modeling the communication network, today's ICT network architecture have been evaluated and taken into account. Analyzing the power systems ability for monitoring, protection and control systems along with its arising wide area communication traffic, entities can be mapped to three different layers, described as follows and illustrated in Figure 2:
- Centralized Monitoring and Control Layer
   This layer maps the centralized components in the power systems, e.g. centralized protection and control algorithms, a control center for monitoring and managing the overall power system and self-managed components like power plants. Communication between components in this layer is available exclusively by transmitting information over the wide area layer beneath.
- Wide Area Communication Layer
   Communication between components on the monitoring and control layer as well as the local process layer is realized by wide area networks using cable, optical and wireless communication. The wide area communication layer connects the other layers by providing a heterogeneous communication network connecting multiple decentralized substation instances to centralized entities of the power system.
- Local Process Layer
   This layer handles communication traffic arising within substation and field level. Here, especially local monitoring, measurements and local process control information is transmitted using dedicated networks typically realized by optical fibers. Communication between components on this layer is possible while communication between substations and to centralized components on the upper layer has to be transmitted via the wide area layer.

For normal operation we assume a full fiber coverage existing along the transmission lines, which can be used exclusively. Communication nodes are modeled at substation level for representation of decentralized data processes, e.g. in distributed protection and control systems as well as in PMU data streaming (cf. Section VI). All units at substation level are connected to an ethernet-based local area network and routed to the wide area network using Ethernet-over-SDH (EoSDH). For representation of centralized data processing (e.g. by Supervisory Control and Data Acquisition (SCADA) systems and Super Phasor Data Concentrators (Super PDCs)), control centers are modeled separately and connected to the wide area network using EoSDH as well. Additionally to wired access technologies, wireless broadband technologies and cellular networks (e.g. Tetra, WiMAX, etc.), will be taken into account as possible candidates for fall-back solutions both as dedicated and shared infrastructures.

### HETEROGENEOUS SIMULATORS

The following section presents the HLA federates used in the combined simulation architecture for realizing the power system driven co-simulation. As our upcoming analysis will integrate heterogeneous tools and simulators from different fields of research, integration concepts depending on the available interfaces are necessary. Thus the tools to be integrated are introduced as follows:

### A. Power System Simulator

For representation of the electrical transmission grid, an electro-mechanical power system simulation with the commercial simulator DIgSILENT PowerFactory [A15] is applied as it constitutes the most adequate type of analysis for the dynamic behavior of large-scale power systems. As this simulation is based on numerically solving differential equations in discrete time steps (currently down to 1 ms), the simulation needs to be synchronized within the time domain of the federation. Furthermore, DIgSILENT does not provide an interface to the HLA, thus the available API needs to be modified to connect, synchronize and manage the power system data objects within the HLA. Here, an OPC interface is used providing access to the simulation data and triggering events in the power system simulation. In general, also an electro-magnetic power system simulation with smaller step sizes and even complexer models can be integrated, if electro-magnetic transients are of interest. However, electro-magnetic simulation is much more computationally intensive and requires data rarely available for larger systems.

### B. Communication Networks Simulator

The simulation of communication networks is performed by a discrete event simulation. Here, OPNET is used as a simulator deploying the HLA interface to connect the network simulator to the federation. Additionally, a scenario generation based on the given CIM model, translating the CIM model into a communication topology assuming optical fibre along the transmission lines is used to automate the scenario development. For the communication network, the power system behaves like a traffic generator that injects a request for transmission directly into the application layer. The cross-platform communication between the power system simulator and OPNET is modelled as HLA interactions. Here, HLA federates are able to subscribe to interaction events, thus the ICT simulator will be notified when the power system simulator initiates a transmission. After the transmission has been successfully delivered to the destination node, the ICT simulator will notify the power system simulator by sending another interaction in turn.

### C. Protection and Control Algorithms

For development of protection and control systems, an indepth analysis of the interplay of a variety of applications and the interdependences with the ICT infrastructure needs to be carried out. These systems use measurement data and information gained by communication from other network devices for decision making and resulting operations in the power system simulation. Such applications can be situated both at the decentralized (e.g. distributed control systems in substations) and the centralized (e.g. contingency-analysis at control centres) level [A16][A17]. They can exhibit a wide range of characteristics, from simple algorithms to intelligent and autonomous systems, being modelled in various software tools (e.g. MATLAB or JAVA-based agents) [A18], which can be integrated in the substation model introduced in Section VI.

### D. Statistical Analysis

Furthermore, new statistical approaches for online analysis of system data are under development and will be integrated in the co-simulation. E.g., a dynamic clustering of nodes based on an analysis of voltage angles is planned to be integrated allowing an identification of homogeneous subsystems, which in turn enables an intelligent aggregation of monitoring information. For this and other monitoring applications it is of interest to connect simulation environments for statistical computing and data analysis to the simulation framework. By using HLA JAVA or C++ interfaces both GNU R as well as MATLAB can be integrated in the federation, offering direct access to the HLA objects.

### COUPLING OF SIMULATORS ON SUBSTATION LEVEL

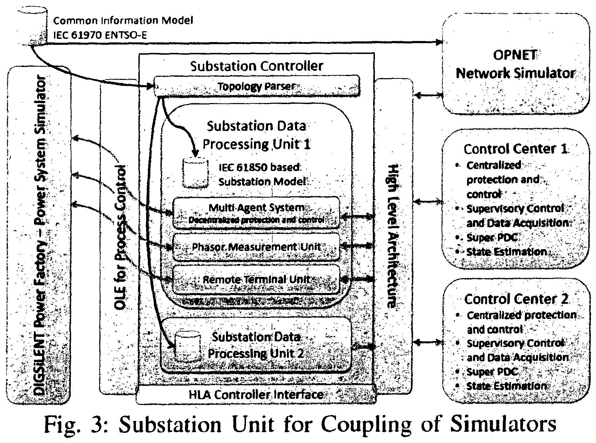

This section describes our implementation approach, considering the Substation Data Processing Unit (SSDPU) model for coupling the simulators described in Section V. SSDPUs represent the nodes of the power system at the substation level, which forms the link to the physical power system and provides access to wide area communication networks. An overview of the SSDPU model is given in detail within Figure 3. At first, the SSDPU implements the data model for mapping the entities between power system and communication network in order to access measurement values and to perform controlling operations in the power system. Furthermore, it is able to initiate and receive data transmissions for monitoring, protection and control on the side of the communication network. To achieve a realistic implementation, the data model is based on the IEC 61850 for modeling the data traffic emerging in the communication network and for enabling the support of real substation hardware in the future. For linking the model to the power system simulator, an OPC based interface is implemented to access current state variables and executing controlling operations by creating events for the power system simulation. On the part of the communication network, new state variables for eventing or measurement values for request-response transmissions are passed to the network simulator by HLA interactions. A model based application programming interface is provided which enables the integration of decentralized protection and control algorithms as well as additional components of the substation (e.g. PMUs and Remote Terminal Units (RTUs)). This enables the extension of the simulation architecture for future components. For aggregating the communication to the sub-simulators, the SSDPUs are encapsulated in a substation controller. In this invention, we will discuss a single substation controller containing all necessary SSDPUs for the power system model. The application flow of the controller can be described as follows:

### 1) Model partition

For creating the IEC 61850 based model description within the SSDPU, a CIM model is provided and parsed by the topology parser inside the substation controller. Here, the given power system model is divided into multiple substation instances containing detailed model information for local process control. Additionally, power system nodes and branches are analyzed and translated into a corresponding communication network topology for close to real-world scenarios.

### 2) Instance generation

For instance generation, each substation instance described in the CIM model is instantiated in a single SSDPU instance using the previously generated submodel. Here, information for local process control is extracted and mapped into an IEC 1850 based model. Finally, for realizing the interfaces to each sub-simulator, attributes inside the local substation model are mapped to corresponding OPC items for accessing the power system simulation. On the side of the communication network simulator, objects within the HLA federation are generated and published according to the Federate Object Model.

### 3) HLA control interface

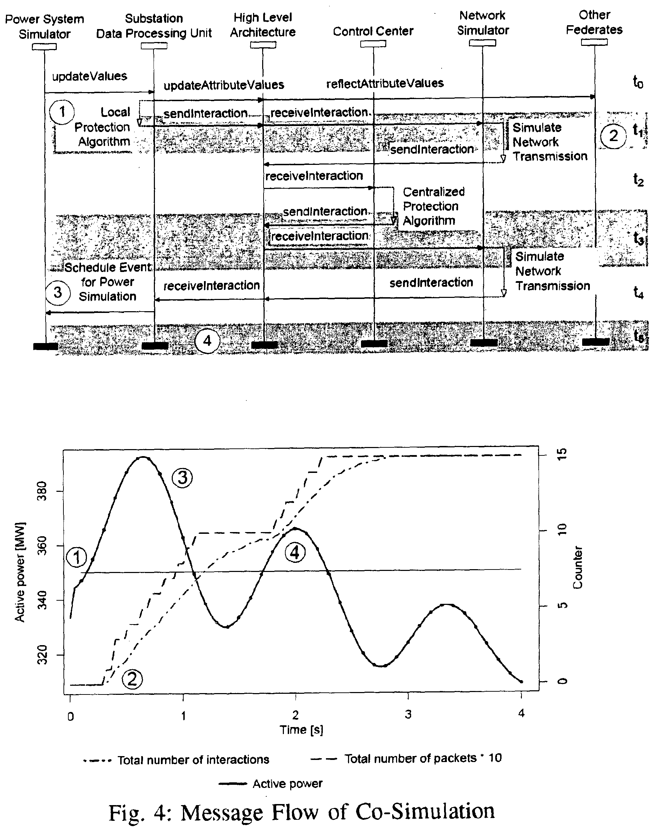

After the HLA mapping is finalized, the control interfaces are set up for managing the time synchronization on part of the HLA federation and realizing the update functions on part of the OPC side. Depending on the type of the attributes, a continuous update each time step, a static update on initialization or an event driven update is realized by the given protection algorithms. The overall hybrid architecture has been validated as a proof of concept via JAVA implementations. An exemplary message flow generated during co-simulation together with its validation is given in Figure 4 and can be detailed as follows:

In an exemplary power system, at time-stamp t0 a power generator accelerates and increases its active power feed-in (1). Its state is determined by measurement values, which are submitted to the SSDPU via the OPC interface and updated within the corresponding HLA objects. A local protection algorithm detects this trend due to the excess of a reference value of 350MW at time-stamp t1 and triggers a network transmission to the control center by interacting with the network simulator. As a result, both interactions within the co-simulation and network packets within the network simulation are increasing (2). At time-stamp t2 the information arrives at the control center. Now a centralized protection algorithm calculates the state of the power system and - in case an intervention is needed - triggers additional operations for the power system. If so, these operations are available at t3, transmitted via the network simulator in turn and available at the substation at time-stamp t4. Here, operations are executed by local process control recovering the generator to a stable condition, which is shown in (3) and achieved at t5. Due to its oscillating behavior, the generator leads to additional interactions, which are shown in (4) and processed as before.

### CONCLUSION AND OUTLOOK

In this description we introduced a novel concept for a generic hybrid simulation environment, which is able to run a combined simulation of power systems and communication networks for validating real-time capabilities of power system protection and control algorithms. At first, we introduced our hybrid simulator architecture describing the modules and functions for realizing a combined simulation. Afterwards, we introduced our substation data processing unit, a CIM based model instance, mapping power system entities to the communication network. The SSDPU concept enables the development and representation of power system protection and control applications both centralized and decentralized. Given by the modular design, we enabled a variety of third party software tools (e.g. MATLAB, GNU R) to be integrated into the simulation environment for future enhancements. Furthermore, the design offers the mapping of all physical levels of power system operations to dedicated models. For realizing the communication between sub-simulators, interfaces and the application flow for initialisation have been described in the course of translating the topology description. The interface with the power system simulator is based on OPC and connecting the communication network simulator is realized by HLAbased objects and interactions, transmitting IEC 61850 based information from the power system to the communication network simulator. For describing the co-simulation, a generic network description approach has been introduced based on the CIM Model. This description is used for mapping power system entities to the corresponding communication nodes based on standardised description models taking into account ongoing research developments by applying ontology matching of CIM and IEC 61850. This will enable a communication network simulation close to reality. The implementation and evaluation of the simulation architecture is currently under strong development and will be extended in future works.

### Second Embodiment

In the following, main components and related concepts for integrated simulation of power and ICT systems are presented. Thereafter, the novel hybrid simulation design based on IEEE 1516-2000 (High-Level Architecture), IEC 61850, OLE for Process Control (OPC) and the Common Information Model (CIM, IEC 61968/61970) is presented. Next, the time components are discussed that are considered for analysis of real-time performance and how they are accounted for in the proposed simulation environment. Then, simulation results for a test case are presented. Finally, a conclusion is drawn and an outlook regarding further work is given.

As power systems are in a transition phase adopting new highly dynamic equipment (e.g. HVDC, FACTS and PMUs) as well as new ICT solutions (e.g. high-performance computing and communication), it becomes increasingly important to address both domains at the same time and to gain insights regarding the real-time capabilities of new approaches.

In the following, first a brief overview on core components that need to be covered in in-depth analysis of dynamic power system operation is given. Secondly, existing simulative solutions already addressing the integrated analysis of power systems and ICT are presented. Among these, it can be distinguished between comprehensive simulation environments and co-simulation.

### A. Core components of power system operation

Power systems monitoring, protection and control systems can be located at three levels [A18]: at the lowest level, the bay level, measurements and actions in the electrical transmission system are carried out. Here, also local Intelligent Electric Devices (IEDs) such as local protection devices are situated. The bay level is linked with the next higher level, the substation level, via Local Area Networks (LAN). On the substation level, data is processed for all connected bays and a communication gateway to a Wide-Area Network (WAN) is available that might consist of several interconnected communication layers, e.g., WANs based on optical fiber or wireless technology.

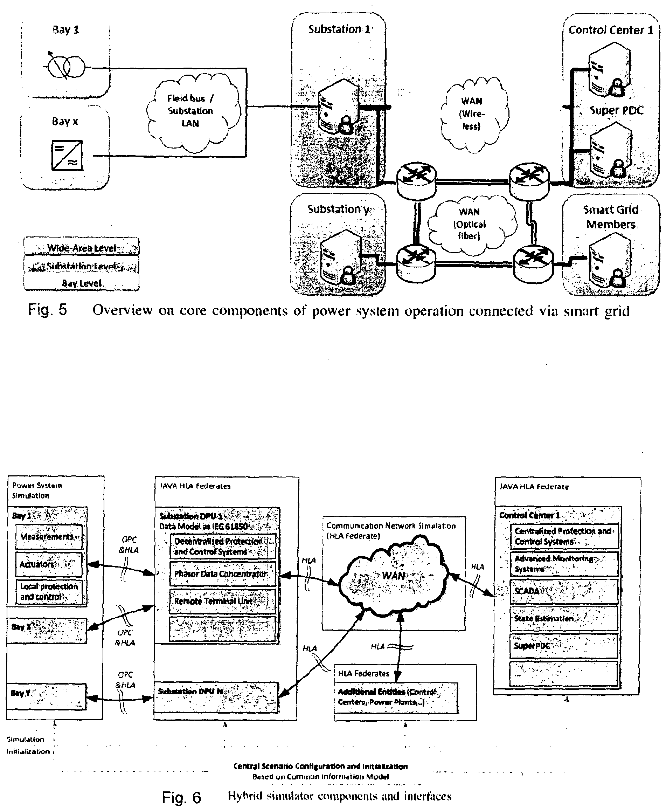

Via WAN, substations can communicate with other substations and entities, e.g., central control centers that collect system-wide information and apply a variety of software tools for system management. These software tools can feature a variety of centralized applications for power system management [A17]. Also, a variety of smart grid members located externally could be connected via WAN. This could, e.g., include communication for power plant management, demand side management or management of electric vehicles. Furthermore, decentralized protection and control applications can be applied at the substation level which are solely based on the interaction of substations without a central control entity. Any entity beyond bay and substation level that has access to the smart grid is in the following referred to as belonging to the wide-area level. Fig. 5 provides an overview on the components discussed and the respective communication links. A testing environment for time-critical applications in system operation should enable the analysis of the interactions at all levels including communication delays and hardware execution times of the applications.

### B. Integrated simulation of power systems and ICT

For integrated simulation of several simulators typically one of two concepts is applied: co-simulation or comprehensive simulation. In the following existing approaches of these concepts are presented that address power systems and ICT simulation.
1) Comprehensive Simulation: A comprehensive simulation for the analysis of both domains combines power system and communication network simulation in one environment. Here, the challenge is to bring together both system models and solving routines which leads either to integrate power systems simulation techniques into a communication network simulator or vice versa. In [A10] such an integrated smart grid simulation framework using OMNeT++ as development platform has been proposed. In this approach the electrical distribution network has been modelled in MATLAB and linked into the OMNeT++ simulation.
2) Co-Simulation: The second concept for integrated simulation of both domains is co-simulation. In co-simulation, networks are analysed by their own dedicated simulators and are brought together by appropriately designed interfaces as well as coordinated simulation management. The first approach in applying a co-simulation environment for power systems and communication networks has been the electric power and communication synchronizing simulator EPOCHS [A11], [A20]. The inventors connected the power systems simulators PSLF and PSCAD/EMTDC to the open source Network Simulator 2 (NS2), realizing the interconnection between simulators using a Run-Time Infrastructure (RTI) based on the High-Level Architecture (IEEE 1516-2000). The system is focused on simulating communication among software agents and does not investigate IT execution and standards for communication in power systems. Furthermore, no information regarding genericity and computational performance has been published to our knowledge. To the knowledge of the inventors, EPOCHS constitutes the most advanced co-simulation approach so far. Further approaches have been presented for connecting the commercial power system simulator PSS™ Netomac to the Network Simulator 2 (NS2) via a JAVA interface [A12] and for linking the open source simulators OpenDSS and NS2 in order to simulate dispatching messages in NS2 and to generate scripts in the power system simulation. For these approaches it seems to be difficult to expand them by other sub-simulators and they lack the use of a time-synchronizing middle-ware as in EPOCHS for distributed simulations.

### HYBRID SIMULATION DESIGN

In this section, the novel hybrid simulator design and reference to current implementation is presented. After giving an overview on the architecture, the explanation follows the structure of the three physical levels in power transmission systems discussed in subsection II-A.

### A. Overview

The High Level Architecture (HLA) [A2], [A21], [A22] is a generic approach for realizing a synchronized and distributed simulation environment which has been standardized in IEEE 1516 in 2000. A distributed simulation using HLA is based on the following components: a Run Time Infrastructure (RTI) serving as a central administration instance, the HLA rules defining and describing the interaction of sub simulators (Federates), Interface specifications (RTI and Federate Ambassadors) and an Object Model Template (OMT). Although the concept of the HLA has been driven by the former Defense Modeling and Simulation Office (DMSO, nowadays Modeling and Simulation Coordination Office) of the US Department of Defense and has mainly been focused on military simulation, various approaches have come from the field of distributed simulation and are applicable to both communication network and power system simulation.

In our hybrid simulation architecture, time synchronization and object management have been specified for the use of HLA. The communication network simulator and any communicating entity in the power system are integrated as HLA federates. Federates can interact and exchange objects, and they can be run in a distributed environment enabling computational performance. Time synchronized simulation of the event-based communication network and the discrete time steps of the power systems simulation is ensured by the HLA. Fig. 6 gives a first overview on the components and interfaces. The architecture is explained in more detail in the following.

### B. Simulation at bay level

Representing the physical power system, at the bay level measurements corresponding to primary equipment are captured, local control and protection are in place, and actions (e.g. change of transformer tap settings) can be executed. The underlying power system can be derived from any Common Information Model (CIM) but needs to be extended by certain dynamic parameters and models of local devices such as PMUs, controllers and protection devices. Besides the network model, the power system simulator receives a scenario from a central configurator (including eed-ins, loads, events such as short-circuits,...) in the initialization phase. All processes at the bay level are simulated in discrete time steps in a power system simulator (realized in steps of 10 ms with DIgSILENT PowerFactory). Every 10 ms, simulation data is provided via an OPC interface to an OPC Server (realized with MatrikonOPC Server, details see [A23]). Using this industrial standard offers the flexibility to integrate real substation hardware (e.g. PMUs) in the simulation environment.

### C. Simulation at substation level

In the initialization phase, a Substation Data Processing Unit (DPU) for each node in the CIM model is initialized (implementation in JAVA), representing all functions available at substation level. Also, it is registered as a federate of the HLA. As a basic function, a data set of current information from the equipment in all bays at that node is created. For this, all equipment at the node is identified by the CIM model and for each piece of equipment a data object based on IEC 61850 is created. Ontology matching of CIM and IEC 61850 is subject of current research [A14], [A24]. It enables the realistic mapping of substation data to communication protocols and further strengthens the ability to integrate real hardware. The Substation DPU can receive data from the OPC Server and can also trigger events in the power system simulation via OPC. Besides the data set, any functions at substation level can be integrated as distinct modules of the DPU. These include decentralized protection and control systems (e.g, [A19], [A25]) or concentration of PMU data in a Phasor Data Concentrator (PDC). The modules could also exhibit functionalities from additional software tools such as MATLAB or Multi-Agent- Systems. Regarding external communication, the DPUs can send messages to other DPUs, control centers or any other external entities. For sending a message, a HLA interaction containing the recipient and the message content is triggered which is then processed by the communication network simulator.

### D. Simulation at wide-area level

All wide-area communication is simulated with an eventbased communications network simulator (realized with OPNET). The communication network topology can be solely derived from the CIM model (e.g. when assuming fiber optics along all transmission lines) or be extended by specific topology information including fallback technologies, e.g. dedicated wireless communication networks.

As the core component of system-wide control, a JAVA instance for a control center (or any additional identity) is initialized at the wide-area level and registered as a federate of the HLA. As for substation DPUs, this instance features a data model (based on CIM and IEC 61850 in order to easily process data from substations) and any functionality of interested (possibly by secondary tools). This is the typical point of monitoring and decision making by centralized applications for monitoring, protection and control as well as of a PDC collecting system-wide information (SuperPDC). Messages (e.g. including control and protection actions) are sent to substation by triggering a HLA interaction followed by the simulation of its processing in the communication network. Furthermore, any additional smart grid participants such as generation units or loads can be initialized at this level.

### EVALUATION OF REAL-TIME PERFORMANCE

A main purpose of the hybrid simulation is the evaluation of real-time performance of applications in power systems operation. In particular, the time elapsed between the measurement of a critical value in the power system (e.g., overload) and successful reaction by the application (e.g., protection applications disconnecting a line, control applications relieving overload by controlling power flows) is subject of interest. It is important to clearly define what is considered to be a successful performance. As an example, in the case of a power flow control application, not the time until the first control response could be relevant but the time until the overload is reduced below a critical level. We categorize the relevant times that impact this total time to successful reaction as follows:
- t_{CT}: time elapsed due to communication technology (e.g., end-to-end delays in communication networks)
- t_{IT}: time elapsed due to information technology (e.g., execution times of algorithms, including waiting during execution because of unavailability of inputs)
- t_{PE}: time elapsed due to primary equipment in the power system (e.g., time for changing transformer tap positions)
- t_{PS}: time elapsed due to dynamic behavior of the power system (e.g., oscillations until steady state is reached)

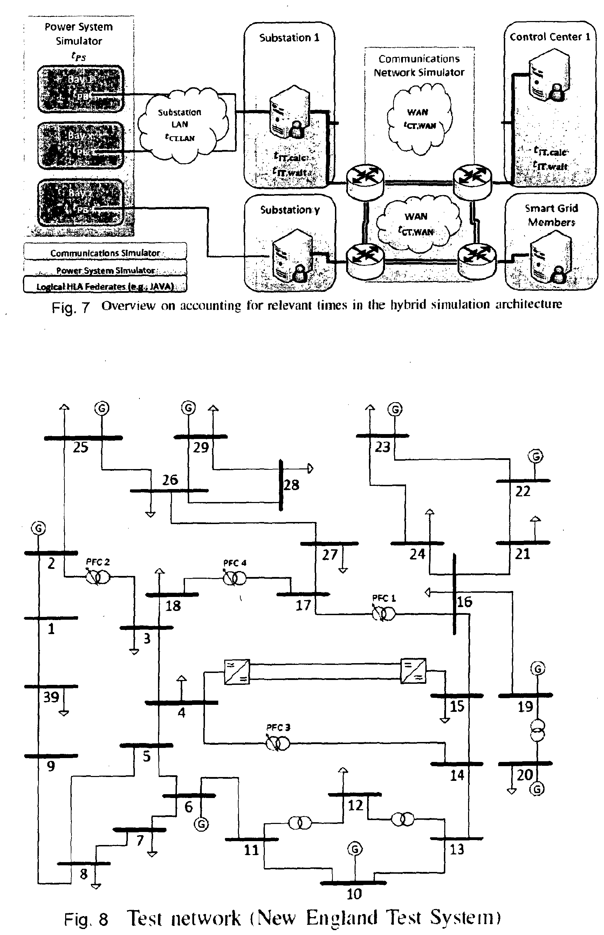

These components are taken into account in the hybrid simulation modules as described in the following and as visualized in Fig. 7. All measurements collected at the bay level become available in the HLA framework and are equipped with a time stamp hereby. At any following data processing step (e.g., at substation or wide-area level) and at any JAVA HLA federate, messages can be queued according to the underlying process. For communication at the wide-area level, the times for queuing (t_{CT;WAN}) are simulated explicitly with the communications network simulator. The communication between bay and substation level could also be simulated explicitly with this architecture by providing a communication network model for the substations in the communications network simulator. In order to reduce complexity and considering the typically comparably short delays in the substation LAN , we currently account for communication delays at this level by an estimate t_{CT;LAN}.

At each IT component (e.g. substation hardware, control center IT systems), times for execution of calculations t_{IT;calc} as well as waiting t_{IT;wait} can also be accounted for by queuing. Execution times for algorithms t_{IT;calc} must be estimated or evaluated beforehand as the algorithm in the hybrid simulation runs in a simulation environment and the performance of the real hardware component is decisive. If the algorithm features time-based requirements for its inputs (e.g., use of measurement data being more recent than an event message), the times for waiting t_{IT;wait} for all necessary input data evolve from the interaction of the hybrid simulation modules involved in providing the measurement data. This could also involve the concentration of PMU data by a PDC.

The timely response of primary power system equipment t_{PE}, e.g. time between receiving the signal for changing a tap position of a transformer and having successfully changed the tap mechanically, is accounted for in the equipment modeling in the power system simulator. The length of t_{PS} results from the power system trajectory evolving due to all module interactions in the dynamic power system simulation and depends on what had been defined as a successful reaction of the application (e.g., also accounting for time until steady state is reached).

Having accounted for the aforesaid timely components, a real-time performance analysis close to reality can be carried out with the presented simulation architecture. A central scenario generator for both simulators based on the CIM system model enables the efficient analysis of a set of scenarios. Practical problems that can be analysed include:
- evaluation of times until successful reaction of applications given different communication infrastructures or fallback solutions
- performance gains by change of algorithms, IT hardware or primary equipment (e.g., investments in fast-controlling devices such as FACTS)
- comparison of applications addressing the same problem (e.g., decentralized vs. centralized control)

Furthermore, the simulation results gained from a set of scenarios can be evaluated by real-time calculus methods and conclusions about performance levels certainly achieved by the applications can be drawn. The inclusion of real-time calculus analysis on base of the results gained with the simulation architecture presented here is subject of ongoing research and will be published in the near future.

### TEST CASE AND SIMULATION RESULTS

In the following, simulation results for a generic scenario are shown as a proof of context and for illustrating fundamental functionalities of the simulator observing a simple example. Detailed analyses of smart grid applications in settings close to reality, in particular of integrated WAMPAC systems, will be published in the future.

For this invention, we investigated the New York Test System (IEEE 39-bus 10-machine system) extended by three Power Flow Contollers (PFCs, in this case Phase Shifting Transformers (PSTs)) and one High-Voltage-Direct-Current (HVDC) line. The system is depicted in Fig 8.

The scenario is set as follows: at t = 2s the load at node 15 is disconnected causing an overload on transmission line TL0414 between nodes 4 and 14. PST3 is controlled by a decentralized control system located at substation 4 using PMU measurements from substation 14 as input for determining the loading of line TL0414. If the loading of the line exceeds 80%, an intervention is created by sending a control message to the PST (PST3) to increase the tap position by one in order to relief the stress on the line. The PST needs a time of t_{PE} = 6s to change the tap position. The data processing unit at substation 14 waits t_{IT;wait} = 10s before sending another measurement to substation 4. A successful response of the control system is assumed to be reaching steady state load flow below a loading of 80%.

As an underlying communication network topology, we assume the substation to contain a substation controller node, a local network switch and a wide area network access router, which are connected by 10 Mbit/s Ethernet. Furthermore, for wide area connectivity, we assume a DS1 link (digital signal with a data rate of 1.55 Mbit/s between substations. The network protocol applied for message exchange is proprietary and transmits UDP (User Datagram Protocol) based messages with a constant size of 240 bytes. Last but not least, as a worst case scenario we assume the communication network not to be initialized so that no network routes exists initially. Times due to substation LAN (t_{CT;LAN}) and IT execution t_{IT;calc} for the simple algorithm are assumed to be very small and are neglected for this example.

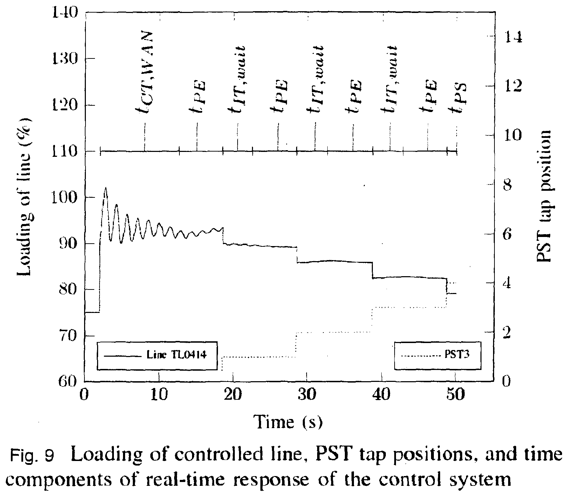

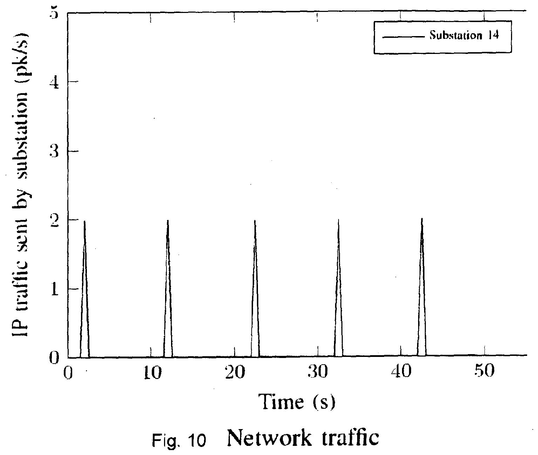

The results of the proof of concept scenario given by Fig. 9 and 10 can be detailed as follows. The given reference numerals refer to those in Fig. 8.

At the beginning the scenario is in a steady state and the communication network is not yet initialized. At timestamp t = 2s a load at node 15 is disconnected causing an overload on transmission line TL0414 between node 4 and 14. The PMU at substation 14 determines the state of line TL0414 instantly and sends a message to substation 4 when the loading exceeds 80%. As the communication network has not yet been initialized this control message is dropped, but routes over the wide-area network are established by routing protocols. Due to the dropped message (and also due to the IT logic of only sending measurements every 10s), a delay of t = 10s in the response of the control system is caused (indicated by t_{CT;WAN} in Fig. 9). At time-stamp t = 12s substation 14 still determines the overload of line TL0414 and repeats its control message to substation 14. This time, the message is delivered successfully (with an delay of t_{CT;WAN} of some tens of milliseconds) to substation 14 and the control algorithm initializes a tap change for PST3. Due to the delay of the PST (t_{PE}), the tap change is successfully executed at t = 18s and the overload of line TL0414 decreases, but still does not reach a steady state. After this first tap change the loading is still above 80%, but due to the IT logic of only sending measurements every 10s, the substation waits for (indicated by t_{IT;wait}) until t = 22s. Then, the PMU repeats its measurements, determines the overload on TL0414 and repeats its control message to substation 14. From this point the last two steps (PST tap change and waiting for delivering next message) are repeated every 10s until a tap change at t = 48s reduces the loading below 80% and within t_{PS} = 2s a steady state of the power system within limits is reached. Being able to gain these results, the control system of this illustrative example could be analyzed with respect to its real-time performance for a larger set of scenarios and in case a faster response is needed, e.g., due to critical times of protection systems, it could be investigated which alternatives (e.g, faster controlling equipment such as FACTS, different routing, different IT logic) would be most suitable and economic.

### CONCLUSION AND OUTLOOK

In this description we propose a new generic hybrid simulation architecture for smart grids which is able to run a time synchronized and distributed co-simulation of power systems as well as communication networks and to account for IT processes and execution. In contrast to the most advanced existing co-simulation proposal of [A11], [A20], the hybrid simulation presented in this embodiment takes into account all levels of power system operation as well as the IT processes explicitly. This enables detailed analyses of the real-time performance of smart grid applications in joint interaction of components at different system levels and of different applications. E.g., performance by use of different algorithms, different ICT infrastructure, new power system equipment as well as impact of additional smart grid members (e.g., electric vehicles) can be evaluated. Furthermore, benefits of the new approach include its generic design based on CIM and IEC61850 for the configuration of both simulators and the HLA Federates. This facilitates to quickly adapt to new system models. Second, the flexibility for integrating a huge variety modules by use of the HLA enables the deployment of the simulation environment for various smart grid applications modeled by a wide range of software tools. Third, the observance of industrial standards such as OPC and IEC61850 in the simulator development and ontology matching of CIM and IEC 61850 allows for simulations close to reality and facilitates the integration of, e.g., substation hardware. The implementation and evaluation of this simulation architecture is currently under strong development, and advances as well as reports on performance will be given in future work. As the current focus is set on investigating applications of monitoring, protection and control in transmission systems and their respective realtime performance, exemplary simulation results for a simple communication based control system for PSTs are shown as a proof of concept. In the near future, the simulator will be used for detailed analyses of the joint real-time interaction of WAMPAC applications developed in DFG research unit FOR1511. These will include the investigation of different communication infrastructures including fallback solutions as well as the use of the simulation results for real-time calculus methods to determine worst-case performance levels of the applications.

### REFERENCES

[A1] A. Johnson, J. Wen, J. Wang, E. Liu, and Y. Hu, "Integrated System Architecture and Technology Roadmap toward WAMPAC," in Innovative Smart Grid Technologies (ISGT) 2011. IEEE, Jan. 2011, pp. 1-5.
[A2] "IEEE Standard for Modeling and Simulation (M&S) High Level Architecture (HLA)- Framework and Rules," IEEE Std 1516-2010 (Revision of IEEE Std 1516-2000), pp. 1 -38, 18 2010.
[A3] IEC TC57, IEC 61850: Communication networks and systems in substations, International Electrotechnical Commission Std.
[A4] B. Milosevic and M. Begovic, "Voltage-stability protection and control using a wide-area network of phasor measurements," IEEE Transactions on Power Systems, vol. 18, no. 1, pp. 121- 127, Feb. 2003.
[A5] G. Ziegler, Digitaler Distanzschutz: Grundlagen und Anwendung. Wiley-VCH, May 2008.
[A6] C. Wietfeld, H. Georg, S. Gr¨oning, C. Lewandowski, C. M"uller, and J. Schmutzler, "Wireless M2M Communication Networks for Smart Grid Applications," in European Wireless 2011 (EW2011). Vienna, Austria: IEEE, April 2011, pp. 275-281.
[A7] A. McMorran, "An Introduction to IEC 61970-301 & 61968-11: The Common Information Model," Institute for Energy and Environment, Department of Electronic and Electrical Engineering, University of Strathclyde, Glasgow, UK, 2007.
[A8] ENTSOE-E, "Common Information Model (CIM) Model Exchange Profile (1st edition)," ENTSOE-E, 5 2009.
[A9] OPC Foundation. (2012, April) The OPC Foundation. [Online]. Available: http://www.opcfoundation.org/
[A10] K. Mets, T. Verschueren, C. Develder, T. Vandoorn, and L. Vandevelde, "Integrated simulation of power and communication networks for smart grid applications," in IEEE 16th International Workshop on Computer Aided Modeling and Design of Communication Links and Networks (CAMAD), June 2011, pp. 61 -65.
[A11] K. Hopkinson, X. Wang, R. Giovanini, J. Thorp, K. Birman, and D. Coury, "EPOCHS: A Platform for Agent-Based Electric Power and Communication Simulation Built from Commercial Off-The-Shelf Components," IEEE Transactions on Power Systems, vol. 21, no. 2, pp. 548 - 558, may 2006.
[A12] J. Bergmann, C. Glomb, J. Götz, J. Heuer, R. Kuntschke, and M. Winter, "Scalability of Smart Grid Protocols: Protocols and Their Simulative Evaluation for Massively Distributed DERs," in First IEEE International Conference on Smart Grid Communications, Oct. 2010, pp. 131 -136.
[A13] C. D. Carothers, R. M. Fujimoto, R. M. Weatherly, and A. L. Wilson, "Design and implementation of HLA time management in the RTI version F.0," in Proceedings of the 29th Conference on Winter simulation. Washington, DC, USA: IEEE, 1997, pp. 373-380.
[A14] Santodomingo, R. and Rodriguez-Mondejar, J. A. and Sanz-Bobi, M. A., "Ontology Matching Approach to the Harmonization of CIM and IEC 61850 Standards," in 1st IEEE International Conference on Smart Grid Communications. IEEE, 2010, pp. 55-60.
[A15] DIgSILENT. (2012, April) DIgSILENT PowerFactory. [Online]. Available: http://www.digsilent.de/
[A16] U. Hager, S. Lehnhoff, C. Rehtanz, and H. F. Wedde, "Multi-Agent System for Coordinated Control of Facts Devices," in 2009 15th International Conference on Intelligent System Applications to Power Systems. IEEE, 2009, pp. 1-6.
[A17] V. Terzija, G. Valverde, Deyu Cai, P. Regulski, V. Madani, J. Fitch, S. Skok, M. M. Begovic, and A. Phadke, "Wide-Area Monitoring, Protection, and Control of Future Electric Power Networks," Proc. IEEE, vol. 99, no. 1, pp. 80-93, 2011.
[A18] C. Rehtanz, Autonomous systems and intelligent agents in power system control and operation. Berlin and New York: Springer, 2003.
[A19] S. C. Müller, U. Häger, C. Rehtanz, and H. F. Wedde, "Application of self-organizing systems in power systems control," in Lecture Notes in Computer Science, D. Hutchison, T. Kanade, J. Kittler, J. M. Kleinberg, F. Mattern, J. C. Mitchell, M. Naor, O. Nierstrasz, C. Pandu Rangan, B. Steffen, M. Sudan, D. Terzopoulos, D. Tygar, M. Y. Vardi, G. Weikum, O. Dieste, A. Jedlitschka, and N. Juristo, Eds. Berlin and Heidelberg: Springer Berlin Heidelberg, 2012, pp. 320-334.
[A20] K. Hopkinson, K. Birman, R. Giovanini, D. Coury, X. Wang, and J. Thorp, "Epochs: integrated commercial off-the-shelf software for agent-based electric power and communication simulation," in Proceedings of the 2003 International Conference on Machine Learning and Cybernetics (IEEE Cat. No.03EX693). IEEE, 2003, pp. 1158-1166.
[A21] "IEEE Standard for Modeling and Simulation (M&S) High Level Architecture (HLA)- Federate Interface Specification," IEEE Std 1516.1- 2010 (Revision of IEEE Std 1516.1-2000), pp. 1 -378, 18 2010.
[A22] "IEEE Standard for Modeling and Simulation (M&S) High Level Architecture (HLA) - Object Model Template (OMT) Specification," IEEE Std 1516.2-2010 (Revision of IEEE Std 1516.2-2000), pp. 1-112, 18 2010.
[A23] S. C. Müller, U. Häger, H. Georg, S. Lehnhoff, C. Rehtanz, C. Wietfeld, H. F. Wedde, and T. Zimmermann, "Einbindung von intelligenten entscheidungsverfahren in die dynamische Simulation von elektrischen Energiesystemen," in Einbindung von intelligenten Entscheidungsverfahren in die dynamische Simulation von elektrischen Energiesystemen. D-A-CH-Konferenz Energieinformatik 2012, Oldenburg, Germany, 2012.
[A24] R. Santodomingo, J. Rodriguez-Mondejar, M. Sanz-Bobi, S. Rohjans, and M. Uslar, "Towards the automatic alignment of cim and scl ontologies," in 2011 IEEE International Conference on Smart Grid Communications (SmartGridComm). IEEE, 2011, pp. 422-427.
[A25] U. Hager, S. Lehnhoff, C. Rehtanz, and H. F. Wedde, "Multi-agent system for coordinated control of facts devices," in 2009 15th International Conference on Intelligent System Applications to Power Systems. IEEE, 2009, pp. 1-6.

## Claims

1. Computer implemented method for hybrid simulation of an electric power distribution network (1) and an associated communication network (2, 5a, 5b, 5c) connected therewith for determination of a time delay between an event occurring in the power distribution network (1) or in the communication network (2, 5a, 5b, 5c) and a desired effect of a performed measure in the power distribution network (1), the measure having been decided on by means of a decision making algorithm as a reaction on the event, the method comprising the steps of
- electromechanical simulating the dynamic behavior of the electrical power distribution network (1) in a first simulator by time-discrete numerically calculating a set of algebro-differential equations describing the power distribution network as a model, wherein the simulated power distribution network (1) comprises at least two nodes (3a, 3b, 3c) and one power transmission line (6) there between, each of the nodes (3a, 3b, 3c) being described by at least a part of the set of algebro-differential equations, one of the nodes (3a) corresponding to a generator and one of the nodes (3c) corresponding to a load,
- simulating in a second simulator event triggered, protocol based transmissions of messages within the communication network (2, 5a, 5b, 5c) from a first communication unit (5b) over a transmission medium (7) to a second communication unit (5a, 5c), each of the communication units (5a, 5b, 5c) being associated to one of the nodes (3a, 3b, 3c) of the power distribution network (1),
- executing on a first processing unit (4b) the decision making algorithm, said first processing unit (4b) being associated to one of the nodes (3b) of the power distribution network (1),
- performing on the first or a second processing unit (4a, 4c) the measure that was decided on by means of the decision making algorithm in reaction to the event, said second processing unit (4a, 4c) being associated to the other or another node (3a, 3c) of the power distribution network (1),
- coordinating the first and the second simulator and the first and the second processing unit (4a, 4b, 4c) by time-synchronous data delivery by means of a superior, central controlling instance,
**characterized in that**
the first simulator, the second simulator, at least one of the first and second processing unit (4a, 4b, 4c), and the controlling instance, running separately in its own process, preferably on its own processor, in particular on a separate computer system, wherein the first simulator, the second simulator and at least one of the processing units having its own local simulation time and the controlling instance having a global simulation time, and that the following steps are performed:
a the first simulator calculates in discrete time steps status values describing the status of the power distribution network (1), said status values are made available to the controlling instance and at least to the first processing unit (4b) at a first point of time t₀,
b in the first processing unit (4b) the decision making algorithm is triggered by the event and is executed using the current state values, wherein a processing time T_{ALGO} is determined the algorithm needs to make a decision on how to react to the event,
c the global simulation time is set to a second point of time t₁ = t₀ + T_{ALGO} by adding the processing time T_{ALGO} to the first point of time t₀, wherein the controlling instance controls the first and the second simulator **in that** their local simulation times do not overrun the second point of time t₁,
d depending on the measure, a communication message is generated by the first processing unit (4b) to be transmitted to a target processing unit (4a, 4c), said message comprising an information about the measure on which the decision making algorithm has decided and an information about a target node (3a, 3b, 3c) at which the measure is to be performed, wherein the target node (3a, 3b, 3c) is the first node (3b) or the second node (3a, 3c),
e a data size of the communication message is calculated,
f associating a time stamp of the second point of time t₁ to the communication message, and conveying the message to the second simulator by means of the controlling instance,
g the second simulator determines the transmission time T_{K} needed for the transmission of the message from the first communication unit (5b) of the first node (3b) to a target communication unit (5a, 5b, 5c) of the target node (3a, 3b, 3c),
h the global simulation time is set to a third point of time t₂ = t₁ + T_{K} by adding the transmission time T_{K} to the second point of time t₁, wherein the controlling instance controls the first simulator **in that** its local simulation times does not overrun the third point of time t₂,
i the controlling instance, based on the information about the target node (3a, 3b, 3c) and the information about the measure, initiates at a target processing unit (4a, 4b, 4c) associated with the target node (3a, 3b, 3c) to execute the measure at the third point of time t₂,
j the target processing unit (4a, 4b, 4c) evaluates the measure by requesting a database to provide an execution time T_{ACTION} needed to execute the measure in reality, and the target processing unit (4a, 4b, 4c) executes the measure by updating one or more status values at a fourth point of time t₃ = t₂ + T_{ACTION} obtained by adding the duration T_{ACTION} to the third point of time, and thereinafter
k the first simulator calculates new status values considering the current status values that have been updated by the target processing unit (5a, 5b, 5c), as soon as its local simulation time overruns the fourth point of time t₃.

2. Method according to claim 1, wherein the steps a to j are continuously repeated.

3. Method according to claim 1 or 2, wherein the simulated powerdistribution network comprises a plurality of nodes (3a, 3b, 3c) and power transmitting lines (6) connecting the nodes (3a, 3b, 3c), each node (3a, 3b, 3c) corresponding to one of the following, a generator, a load, a busbar, a transformer, a substation, a switching station, a power plant or an operation and maintenance center, each node (3a, 3b, 3c) being associated to a communication unit (5a, 5b, 5c) to send and / or receive communication messages, and each node (3a, 3b, 3c) being associated to a processing unit (4a, 4b, 4c) to decide on or execute a measure as a reaction on an event occurring in the simulated node (3a, 3b, 3c).

4. Method according to one of the foregoing claims, wherein each processing unit (4a, 4b, 4c) comprises simulated measuring equipment, protective equipment and/ or controlling equipment.

5. Method according to one of the foregoing claims, wherein all processes in the processing units (4a, 4b, 4c) are executed in parallel and timely synchronized, in particular timely overlapping.

6. Method according to one of the foregoing claims, wherein the first simulator stores the status values in a global database for enabling access to the status values by the processing units or the controlling instance.

7. Method according to one of the foregoing claims, wherein the controlling instance stops the first simulator when a next time step of its local simulation time would exceed the second point of time t₁ or third point of time t₂, and that the first simulator is resumed when the global simulation time reaches the second point of time t₁ or third point of time t₂.

8. Method according to one of the foregoing claims, wherein the status values are fetched from the first simulator by an OPC server and are provided and/ or conveyed to one or more of the processing units (4a, 4b, 4c) and/ or the controlling instance.

9. Method according to one of the foregoing claims, wherein the transmission time T_{K} comprises a first time-portion for preparing the message for data transmission in the sending first communication unit (5b), a second time-portion for preparing the message for processing in the receiving target communication unit (5a, 5b, 5c), and a third time-portion for transmitting the message via the transmission medium (7).

10. Method according to claim 9, wherein determining the first and second time-portion of the transmission time T_{K} is performed by calculating status models of the sending first communication unit (5b) and the receiving target communication unit (5a, 5b, 5c).

11. Method according to claim 9 or 10, wherein determining the third time-portion of the transmission time T_{K} is performed by calculating an analytic and/ or stochastic channel model of the transmission medium (7).

12. Method according to claim 9, 10 or 11, wherein a layered model for the first communication unit (5b) and for the target communication unit (5a, 5b, 5c) is used for determining the first and the second time-portion of the transmission time T_{K}, each layer of the models using a special protocol for data transmission, and the transmission of the message from one layer of the first communication unit (5b) to another layer of the target communication unit (5a, 5b, 5c) is performed by protocol-specific encapsulation of the message on the sender side and decapsulation of the message on the receiver side, wherein a specific duration is used for each encapsulation step and decapsulation step, said durations being summed up to determine the first and second time-portion.

13. Method according to one of the foregoing claims, wherein the controlling instance is a High Level Architecture according to IEEE standard 1516 or successors.

14. Method according to one of the foregoing claims, wherein after the second point of time t₁ has been determined the local simulation time of the first and/ or second simulator is advanced to and continued at the second point of time t₁ when the second point of time t₁ is in the local simulation time's future.

15. Method according to one of the foregoing claims, wherein the local simulation time of the first and/ or second simulator is hold, and holding is performed directly after the event is detected, or when the decision making algorithm has been started, or shortly after this start.

16. Method according to claim 15, wherein when the second point of time has been calculated and lies in the future in comparison with the stopped local simulation time, and calculating the equations of the model of the power distribution network (1) has not been completed yet, the first simulator will be continued until calculation of the equation is completed, and after that, the local simulation time of the first and/ or second simulator is advanced to the second point of time t₁.

17. Method according to one of the foregoing claims, wherein after the third point of time t₂ has been determined the local simulation time of the first and/ or second simulator is advanced to and continued at the third point of time t₂ when the third point of time t₂ is in the local simulation time's future.

18. Method according to one of the foregoing claims, wherein the local simulation time of the first and/ or second simulator is hold, and holding is performed directly after the measure has been decided on, or the decision making algorithm has been completed, or when the data size of the message is calculated.

19. Method according to claim 18, wherein when the third point of time has been calculated and lies in the future in comparison with the stopped local simulation time, and calculating the equations of the model of the power distribution network (1) has not been completed yet, the first simulator will be continued until calculation of the equation is completed, and after that, the local simulation time of the first and/ or second simulator is advanced to the third point of time t₂.

## Patentansprüche

1. Computerimplementiertes Verfahren zur hybriden Simulation eines elektrischen Energieverteilungsnetzwerks (1) und eines zugehörigen, damit verbundenen Kommunikationsnetzwerks (2, 5a, 5b, 5c) zur Bestimmung einer zeitlichen Verzögerung zwischen einem im Energieverteilungsnetzwerk (1) oder im Kommunikationsnetzwerk (2, 5a, 5b, 5c) auftretenden Ereignis und einer gewünschten Wirkung einer im Energieverteilungsnetzwerk (1) durchgeführten Maßnahme, wobei über die Maßnahme mittels eines Entscheidungsalgorithmus als Reaktion auf das Ereignis entschieden wurde, und das Verfahren die folgenden Schritte umfasst
- elektromechanisches Simulieren des dynamischen Verhaltens des elektrischen Energieverteilungsnetzwerk (1) in einem ersten Simulator durch zeitdiskrete numerische Berechnung eines Satzes von Algebro-Differentialgleichungen, die das Energieverteilungsnetzwerk als Modell beschreiben, wobei das simulierte Energieverteilungsnetzwerk (1) mindestens zwei Knoten (3a, 3b, 3c) und eine Energieübertragungsleitung (6) dazwischen aufweist, wobei jeder der Knoten (3a, 3b, 3c) durch mindestens einen Teil des Satzes von Algebro-Differentialgleichungen beschrieben ist, wobei einer der Knoten (3a) einem Generator entspricht und einer der Knoten (3c) einer Last entspricht,
- Simulieren von Ereignis getriggerten, protokollbasierte Übertragungen von Nachrichten innerhalb des Kommunikationsnetzwerks (2, 5a, 5b, 5c) von einer ersten Kommunikationseinheit (5b) über ein Übertragungsmedium (7) zu einer zweiten Kommunikationseinheit (5a, 5c) in einem zweiten Simulator, wobei jede der Kommunikationseinheiten (5a, 5b, 5c) einem der Knoten (3a, 3b, 3c) des Energieverteilungsnetzwerks (1) zugeordnet ist,
- Ausführen des Entscheidungsalgorithmus auf einer ersten Verarbeitungseinheit (4b), wobei die erste Verarbeitungseinheit (4b) einem der Knoten (3b) des Energieverteilungsnetzwerks (1) zugeordnet ist,
- Durchführen der Maßnahme, die mittels des Entscheidungsalgorithmus als Reaktion auf das Ereignis beschlossen wurde, auf der ersten oder einer zweiten Verarbeitungseinheit (4a, 4c), wobei die zweite Verarbeitungseinheit (4a, 4c) dem anderen oder einem anderen Knoten (3a, 3c) des Energieverteilungsnetzwerks (1) zugeordnet ist,
- Koordinieren des ersten und des zweiten Simulators und der ersten und der zweiten Verarbeitungseinheit (4a, 4b, 4c) durch zeit-synchrone Datenzuführung mittels einer übergeordneten, zentralen Steuerungsinstanz,
**dadurch gekennzeichnet, dass**
wobei der erste Simulator, der zweite Simulator, mindestens eine der ersten und zweiten Verarbeitungseinheit (4a, 4b, 4c) und die Steuerungsinstanz in ihrem eigenen Prozess, vorzugsweise auf ihrem eigenen Prozessor, insbesondere auf einem separaten Computersystem, getrennt laufen, wobei der erste Simulator, der zweite Simulator und mindestens eine der Verarbeitungseinheiten ihre eigene lokale Simulationszeit aufweisen und die Steuerungsinstanz eine globale Simulationszeit aufweist, und dass die folgenden Schritte durchgeführt werden:
a der erste Simulator berechnet in diskreten Zeitschritten Statuswerte, die den Zustand des Stromverteilungsnetzwerks (1) beschreiben, wobei die besagten Statuswerte der Steuerungsinstanz und mindestens der ersten Verarbeitungseinheit (4b) zu einem ersten Zeitpunkt t₀ bereitgestellt werden,
b in der ersten Verarbeitungseinheit (4b) der Entscheidungsalgorithmus durch das Ereignis ausgelöst wird und unter Verwendung der aktuellen Zustandswerte ausgeführt wird, wobei eine Verarbeitungszeit T_{ALGO} bestimmt wird, die der Algorithmus benötigt, um eine Entscheidung zu treffen, wie auf das Ereignis reagiert werden soll,
c die globale Simulationszeit wird auf einen zweiten Zeitpunkt t₁ = t₀ + T_{TALGO} durch Addition der Verarbeitungszeit T_{TALGO} zum ersten Zeitpunkt t₀ gesetzt, wobei die Steuerungsinstanz den ersten und den zweiten Simulator derart steuert, dass deren lokale Simulationszeiten den zweiten Zeitpunkt t₁ nicht überschreiten,
d in Abhängigkeit von der Maßnahme wird eine Kommunikationsnachricht von der ersten Verarbeitungseinheit (4b) erzeugt, die an eine Zielverarbeitungseinheit (4a, 4c) zu übertragen ist, wobei besagte Nachricht eine Information über die Maßnahme, über die der Entscheidungsalgorithmus entschieden hat, und eine Information über einen Zielknoten (3a, 3b, 3c) umfasst, an dem die Maßnahme durchzuführen ist, wobei der Zielknoten (3a, 3b, 3c) der erste Knoten (3b) oder der zweite Knoten (3a, 3c) ist,
e eine Datengröße der Kommunikationsnachricht wird berechnet,
f Verknüpfen eines Zeitstempels des zweiten Zeitpunkts t₁ mit der Kommunikationsnachricht und Übermitteln der Nachricht an den zweiten Simulator mittels der Steuerungsinstanz,
g der zweite Simulator bestimmt die Übertragungszeit T_{K}, die benötig wird, um die Nachricht von der ersten Kommunikationseinheit (5b) des ersten Knotens (3b) zu einer Zielkommunikationseinheit (5a, 5b, 5c) des Zielknotens (3a, 3b, 3c) zu übertragen,
h die globale Simulationszeit wird auf einen dritten Zeitpunkt t₂ = t₁ + T_{K} durch Addition der Übertragungszeit T_{K} zum zweiten Zeitpunkt t₁ gesetzt, wobei die Steuerungsinstanz den ersten Simulator derart steuert, dass dessen lokale Simulationszeit den dritten Zeitpunkt t₂ nicht überschreitet,
i die Steuerungsinstanz, basierend auf der Information über den Zielknoten (3a, 3b, 3c) und der Information über die Maßnahme, initiiert die Ausführung der Maßnahme zu einem dritten Zeitpunkt t₂ an einer dem Zielknoten (3a, 3b, 3c) zugeordneten Zielverarbeitungseinheit (4a, 4b, 4c),
j die Zielverarbeitungseinheit (4a, 4b, 4c) wertet die Maßnahme aus, indem sie eine Datenbank abfragt, eine Ausführungsdauer T_{ACTION} zu liefern, die für die Ausführung der Maßnahme in der Realität notwendig ist, und die Zielverarbeitungseinheit (4a, 4b, 4c) führt die Maßnahme aus durch Aktualisierung eines oder mehrerer Statuswerte zu einem vierten Zeitpunkt t₃ = t₂ + T_{ACTION}, der durch Addition der Dauer T_{ACTION} zum dritten Zeitpunkt erhalten wird, und danach
k berechnet der erste Simulator neue Statuswerte unter Berücksichtigung der aktuellen Statuswerte, die von der Zielverarbeitungseinheit (5a, 5b, 5c) aktualisiert worden sind, sobald seine lokale Simulationszeit den vierten Zeitpunkt t₃ überschreitet.

2. Verfahren nach Anspruch 1, bei dem die Schritte a bis j kontinuierlich wiederholt werden.

3. Verfahren nach Anspruch 1 oder 2, bei dem das simulierte Energieverteilungsnetzwerks eine Vielzahl von Knoten (3a, 3b, 3c) und Energieübertragungsleitungen (6) umfasst, die die Knoten (3a, 3b, 3c) verbinden, wobei jeder Knoten (3a, 3b, 3c) einem der folgenden entspricht: einem Generator, einer Last, einer Sammelschiene, einem Transformator, einer Unterstation, einer Schaltanlage, einem Kraftwerk oder einer Betriebs- und Wartungszentrale, wobei jedem Knoten (3a, 3b, 3c) eine Kommunikationseinheit (5a, 5b, 5c) zugeordnet ist, um Kommunikationsnachrichten senden und/ oder empfangen zu können, und jedem Knoten (3a, 3b, 3c) eine Verarbeitungseinheit (4a, 4b, 4c) zugeordnet ist, um über die Maßnahme zu entscheiden oder sie als Reaktion auf ein in dem simulierten Knoten (3a, 3b, 3c) auftretendes Ereignis auszuführen.

4. Verfahren nach einem der vorgenannten Ansprüche, bei dem jede Verarbeitungseinheit (4a, 4b, 4c) simulierte Messgeräte, Schutzeinrichtungen und/oder Steuereinrichtungen umfasst.

5. Verfahren nach einem der vorstehenden Ansprüche, bei dem alle Prozesse in den Verarbeitungseinheiten (4a, 4b, 4c) parallel und zeitgleich synchronisiert ausgeführt werden, insbesondere sich zeitlich überlagernd.

6. Verfahren nach einem der vorstehenden Ansprüche, bei dem der erste Simulator die Statuswerte in einer globalen Datenbank speichert, um den Verarbeitungseinheiten oder der Steuerungsinstanz den Zugriff auf die Statuswerte zu ermöglichen.

7. Verfahren nach einem der vorstehenden Ansprüche, bei dem die Steuerungsinstanz den ersten Simulator anhält, wenn ein nächster Zeitschritt seiner lokalen Simulationszeit den zweiten Zeitpunkt t₁ oder dritten Zeitpunkt t₂ überschreiten würde, und dass der erste Simulator weiterläuft, wenn die globale Simulationszeit den zweiten Zeitpunkt t₁ oder dritten Zeitpunkt t₂ erreicht.

8. Verfahren nach einem der vorgenannten Ansprüche, bei dem die Statuswerte von einem OPC-Server beim ersten Simulator abgeholt und einer oder mehrerer der Verarbeitungseinheiten (4a, 4b, 4c) und/oder der Steuerungsinstanz bereitgestellt und/oder übermittelt.

9. Verfahren nach einem der vorgenannten Ansprüche, bei dem die Übertragungszeit T_{K} einen ersten Zeitanteil zum Vorbereiten der Nachricht für die Datenübertragung in der sendenden ersten Kommunikationseinheit (5b), einen zweiten Zeitanteil zum Vorbereiten der Nachricht für die Verarbeitung in der empfangenden Zielkommunikationseinheit (5a, 5b, 5c) und einen dritten Zeitanteil zum Senden der Nachricht über das Übertragungsmedium (7) umfasst.

10. Verfahren nach Anspruch 9, bei dem die Bestimmung des ersten und zweiten Zeitanteils der Übertragungszeit T_{K} durch die Berechnung von Zustandsmodellen der sendenden ersten Kommunikationseinheit (5b) und der empfangenden Zielkommunikationseinheit (5a, 5b, 5c) erfolgt.

11. Verfahren nach Anspruch 9 oder 10, bei dem die Bestimmung des dritten Zeitanteils der Übertragungszeit TK durch die Berechnung eines analytischen und/oder stochastischen Kanalmodells des Übertragungsmediums (7) erfolgt.

12. Verfahren nach Anspruch 9, 10 oder 11, bei dem ein Schichtmodell für die erste Kommunikationseinheit (5b) und für die Zielkommunikationseinheit (5a, 5b, 5c) zur Bestimmung des ersten und zweiten Zeitanteils der Übertragungszeit T_{K} verwendet wird, wobei jede Schicht der Modelle ein spezielles Datenübertragungsprotokoll verwendet, und das Übertragen der Nachricht von einer Schicht der ersten Kommunikationseinheit (5b) zu einer anderen Schicht der Zielkommunikationseinheit (5a, 5b, 5c) durch protokollspezifische Einkapselung der Nachricht auf der Senderseite und die Entkapselung der Nachricht auf der Empfängerseite erfolgt, wobei für jeden Verkapselungsschritt und Entkapselungsschritt eine bestimmte Dauer verwendet wird, wobei die Dauern zum Bestimmen des ersten und zweiten Zeitanteils aufsummiert werden.

13. Verfahren nach einem der vorstehenden Ansprüche, bei dem die steuernde Instanz eine High-Level-Architektur nach dem IEEE-Standard 1516 oder neuer ist.

14. Verfahren nach einem der vorstehenden Ansprüche, bei dem nach der Bestimmung des zweiten Zeitpunkts t₁ die lokale Simulationszeit des ersten und/oder zweiten Simulators zum zweiten Zeitpunkt t₁ vorgeschoben und fortgesetzt wird, wenn der zweite Zeitpunkt t₁ in der Zukunft der lokalen Simulationszeit liegt.

15. Verfahren nach einem der vorstehenden Ansprüche, bei dem die lokale Simulationszeit des ersten und/oder zweiten Simulators angehalten wird, wobei das Anhalten direkt nach dem Erkennen des Ereignisses oder nach dem Starten des Entscheidungsalgorithmus oder kurz nach diesem Start erfolgt.

16. Verfahren nach Anspruch 15, bei dem, wenn der zweite Zeitpunkt berechnet wurde und im Vergleich zur angehaltenen lokalen Simulationszeit in der Zukunft liegt, und die Berechnung der Gleichungen des Modells des Energieverteilungsnetzwerks (1) noch nicht abgeschlossen ist, der erste Simulator fortgesetzt wird, bis die Berechnung der Gleichung abgeschlossen ist, und danach die lokale Simulationszeit des ersten und/oder zweiten Simulators auf den zweiten Zeitpunkt t₁ verschoben wird.

17. Verfahren nach einem der vorstehenden Ansprüche, bei dem nach der Bestimmung des dritten Zeitpunkts t₂ die lokale Simulationszeit des ersten und/oder zweiten Simulators zum dritten Zeitpunkt t₂ vorgeschoben und fortgesetzt wird, wenn der dritte Zeitpunkt t₂ in der Zukunft der lokalen Simulationszeit liegt.

18. Verfahren nach einem der vorstehenden Ansprüche, bei dem die lokale Simulationszeit des ersten und/oder zweiten Simulators angehalten wird und das Anhalten unmittelbar nach der Entscheidung über die Maßnahme, nach dem Abschluss des Entscheidungsalgorithmus oder nach der Berechnung der Datengröße der Nachricht durchgeführt wird.

19. Verfahren nach Anspruch 18, bei dem wenn der dritte Zeitpunkt berechnet worden ist und im Vergleich zur angehaltenen lokalen Simulationszeit in der Zukunft liegt, und die Berechnung der Gleichungen des Modells des Energieverteilungsnetzwerks (1) noch nicht abgeschlossen ist, der erste Simulator fortgesetzt wird, bis die Berechnung der Gleichung abgeschlossen ist, und danach die lokale Simulationszeit des ersten und/oder zweiten Simulators auf den dritten Zeitpunkt t₂ vorgeschoben wird.

## Revendications

1. Procédé mis en oeuvre par ordinateur pour la simulation hybride d'un réseau de distribution d'énergie électrique (1) et d'un réseau de communication associé (2, 5a, 5b, 5c) connecté à celui-ci pour déterminer un retard entre un événement se produisant dans le réseau de distribution d'énergie (1) ou dans le réseau de communication (2, 5a, 5b, 5c) et un effet souhaité d'une mesure effectuée dans le réseau de distribution d'énergie (1), cette mesure ayant été déterminée par un algorithme décisionnel comme réaction sur cet événement, le procédé comprenant les étapes suivantes
- électromécanique simuler, dans un premier simulateur, du comportement dynamique du réseau de distribution d'énergie électrique (1) par calcul numérique à temps discret d'un ensemble d'équations algèbro-différentielles décrivant le réseau de distribution d'énergie comme modèle, dans lequel le réseau de distribution d'énergie (1) simulé comprend au moins deux noeuds (3a, 3b, 3c) et une ligne de transmission d'énergie (6) entre ces derniers, chacun des noeuds (3a, 3b, 3c) étant décrit par au moins une partie de l'ensemble des équations algébro-différentielles, un des noeuds (3a) correspondant à un générateur et un des noeuds (3c) correspondant à une charge,
- simuler, dans un second simulateur, des transmissions de messages déclenchées par événement, basées sur un protocole, à l'intérieur du réseau de communication (2, 5a, 5b, 5c) à partir d'une première unité de communication (5b) via un support de transmission (7) vers une seconde unité de communication (5a, 5c), où chacune des unités de communication (5a, 5b, 5c) est associée à l'un des noeuds (3a, 3b, 3c) du réseau de distribution d'énergie (1),
- exécuter sur une première unité de traitement (4b) l'algorithme de prise de décision, ladite première unité de traitement (4b) étant associée à l'un des noeuds (3b) du réseau de distribution d'énergie (1),
- exécuter sur la première ou la deuxième unité de traitement (4a, 4c) la mesure qui a été décidée au moyen de l'algorithme de prise de décision en réaction à l'événement, ladite deuxième unité de traitement (4a, 4c) étant associée à l'autre ou à un autre noeud (3a, 3c) du réseau (1) de distribution d'énergie (1),
- coordination des premier et deuxième simulateurs et des première et deuxième unités de traitement (4a, 4b, 4c) au moyen d'une transmission de données synchronisée dans le temps au moyen d'une instance de contrôle supérieure et centrale,
**caractérisé en ce que**
le premier simulateur, le second simulateur, au moins l'une des première et seconde unités de traitement (4a, 4b, 4c) et l'instance de commande, fonctionnant séparément dans son propre processus, de préférence sur son propre processeur, en particulier sur un système informatique séparé, le premier simulateur, le second simulateur et au moins une des unités de traitement ayant son propre temps de simulation local et l'instance de commande ayant un temps de simulation global, et que les étapes suivantes sont effectuées:
a le premier simulateur calcule par étapes temporelles discrètes des valeurs d'état décrivant l'état du réseau de distribution d'énergie (1), lesdites valeurs d'état sont mises à la disposition de l'instance de commande et au moins de la première unité de traitement (4b) à un premier point de temps t₀,
b dans la première unité de traitement (4b), l'algorithme de prise de décision est déclenché par l'événement et est exécuté en utilisant les valeurs d'état actuelles, dans lequel un temps de traitement T_{ALGO} est déterminé, l'algorithme doit prendre une décision sur la manière de réagir à l'événement,
c le temps de simulation global est réglé à un second point de temps t₁ = t₀ + T_{ALGO} en ajoutant le temps de traitement T_{ALGO} au premier point de temps t₀, l'instance de commande commandant le premier et le second simulateur, **en ce que** leurs temps de simulation locaux ne dépassent pas le second point de temps t₁,
d en fonction de la mesure, un message de communication est généré par la première unité de traitement (4b) à transmettre à une unité de traitement cible (4a, 4c), ledit message comprenant une information sur la mesure sur laquelle l'algorithme décisionnel a décidé et une information sur un noeud cible (3a, 3b, 3c) auquel la mesure doit être effectuée, le noeud cible (3a, 3b, 3c) étant le premier noeud (3b) ou le deuxième noeud (3a, 3c),
e une taille de données du message de communication est calculée,
f associer un horodatage du deuxième point de temps t₁ au message de communication, et transmettre le message au second simulateur au moyen de l'instance de contrôle,
g le second simulateur détermine le temps de transmission T_{K} nécessaire pour la transmission du message de la première unité de communication (5b) du premier noeud (3b) vers une unité de communication cible (5a, 5b, 5c) du noeud cible (3a, 3b, 3c),
h le temps de simulation global est réglé à un troisième point de temps t₂ = t₁ + T_{K} en ajoutant le temps de transmission T_{K} au deuxième point de temps t₁, l'instance de commande commandant le premier simulateur **en ce que** ses temps de simulation locaux ne dépassent pas le troisième point de temps t₂,
i l'instance de contrôle, sur la base des informations sur le noeud cible (3a, 3b, 3c) et des information sur la mesure, initie à une unité de traitement cible (4a, 4b, 4c) associée au noeud cible (3a, 3b, 3c) pour exécuter la mesure au troisième point de temps t₂,
j l'unité de traitement cible (4a, 4b, 4c) évalue la mesure en demandant à une base de données de fournir un temps d'exécution T_{ACTION} nécessaire pour exécuter la mesure dans la réalité, et l'unité de traitement cible (4a, 4b, 4c) exécute la mesure en actualisant une ou plusieurs valeurs de statut à un quatrième point de temps t₃ = t₂ + T_{ACTION} obtenue en ajoutant la durée T_{ACTION} au troisième moment, et ci-après
k le premier simulateur calcule de nouvelles valeurs d'état en tenant compte des valeurs d'état actuelles qui ont été mises à jour par l'unité de traitement cible (5a, 5b, 5c), dès que son temps de simulation local dépasse le quatrième point de temps t₃.

2. Procédé selon la revendication 1, dans lequel les étapes a à j sont répétées en continu.

3. Procédé selon la revendication 1 ou 2, dans lequel le réseau de distribution de puissance simulé comprend une pluralité de noeuds (3a, 3b, 3c) et de lignes de transmission d'énergie (6) reliant les noeuds (3a, 3b, 3c), chaque noeud (3a, 3b, 3c) correspondant à un des éléments suivants, un générateur, une charge, une barre omnibus, un transformateur, un poste de commutation ou une sous-station, une centrale électrique ou un centre d'exploitation et de maintenance, chaque noeud (3a, 3b, 3c) étant associé à une unité de communication (5a, 5b, 5c) pour envoyer et/ou recevoir des messages de communication, et chaque noeud (3a, 3b, 3c) étant associé à une unité de traitement (4a, 4b, 4c) pour décider ou exécuter une mesure en réaction à un événement se produisant dans le noeud simulé (3a, 3b, 3c).

4. Procédé selon l'une des revendications précédentes, dans lequel chaque unité de traitement (4a, 4b, 4c) comprend un équipement de mesure, de protection et/ou de contrôle simulé.

5. Procédé selon l'une des revendications précédentes, dans lequel tous les processus dans les unités de traitement (4a, 4b, 4c) sont exécutés en parallèle et synchronisés dans le temps, en particulier par chevauchement dans le temps.

6. Procédé selon l'une des revendications précédentes, dans lequel le premier simulateur stocke les valeurs d'état dans une base de données globale pour permettre l'accès aux valeurs d'état par les unités de traitement ou l'instance de contrôle.

7. Procédé selon l'une des revendications précédentes, dans lequel l'instance de contrôle arrête le premier simulateur lorsqu'un pas de temps suivant de son temps de simulation local dépasserait le deuxième point de temps t₁ ou le troisième point de temps t₂, et en ce que le premier simulateur est repris lorsque le temps de simulation global atteint le deuxième point de temps t₁ ou le troisième point de temps t₂.

8. Procédé selon l'une des revendications précédentes, dans lequel les valeurs d'état sont extraites du premier simulateur par un serveur OPC et sont fournies et/ou transmises à une ou plusieurs des unités de traitement (4a, 4b, 4c) et/ou l'instance de contrôle.

9. Procédé selon l'une des revendications précédentes, dans lequel le temps de transmission T_{K} comprend une première proportion de temps pour préparer le message pour la transmission de données dans la première unité de communication émettrice (5b), une deuxième proportion de temps pour préparer le message pour traitement dans l'unité de communication cible réceptrice (5a, 5b, 5c), et une troisième proportion de temps pour transmettre le message via le milieu de transmission (7).

10. Procédé selon la revendication 9, dans lequel la détermination de la première et de la seconde proportion temporelle du temps de transmission T_{K} est effectuée en calculant des modèles d'état de la première unité de communication émettrice (5b) et de l'unité de communication cible réceptrice (5a, 5b, 5c).

11. Procédé selon la revendication 9 ou 10, dans lequel la détermination de la troisième proportion temporelle du temps de transmission TK est effectuée en calculant un modèle de canal analytique et/ou stochastique du milieu de transmission (7).

12. Procédé selon la revendication 9, 10 ou 11, dans lequel un modèle en couches pour la première unité de communication (5b) et pour l'unité de communication cible (5a, 5b, 5c) est utilisé pour déterminer la première et la seconde proportion temporelle du temps de transmission T_{K}, chaque couche des modèles utilisant un protocole spécial pour la transmission des données, et la transmission du message d'une couche de la première unité de communication (5b) à une autre couche de l'unité de communication cible (5a, 5b, 5c) est effectuée par encapsulation spécifique au protocole du message du côté émetteur et décapsulation du message du côté récepteur, une durée spécifique étant utilisée pour chaque étape d'encapsulation et décapsulation, lesdites durées étant additionnées pour déterminer les première et seconde proportions de temps.

13. Procédé selon l'une des revendications précédentes, dans lequel l'instance de contrôle est une architecture de haut niveau selon la norme IEEE 1516 ou ses successeurs.

14. Procédé selon l'une des revendications précédentes, dans lequel après que le deuxième point de temps t₁ a été déterminé, le temps de simulation local du premier et/ou du deuxième simulateur est avancé et poursuivi au deuxième point de temps t₁ lorsque le deuxième point de temps t₁ est dans le futur du temps de simulation local.

15. Procédé selon l'une des revendications précédentes, **caractérisé en ce que** le temps de simulation local du premier et/ou du second simulateur est maintenu, et le maintien est effectué directement après la détection de l'événement ou lorsque l'algorithme de prise de décision a été lancé, ou peu après ce démarrage.

16. Procédé selon la revendication 15, dans lequel, lorsque le deuxième point de temps a été calculé et se situe dans le futur par rapport au temps de simulation local arrêté, et que le calcul des équations du modèle du réseau de distribution d'énergie (1) n'est pas encore terminé, le premier simulateur sera poursuivi jusqu'au calcul de l'équation, et ensuite, le temps de simulation local du premier et/ou second simulateur est avancé au second point de temps t₁.

17. Procédé selon l'une des revendications précédentes, dans lequel après que le troisième point de temps t₂ a été déterminé, le temps de simulation local du premier et/ou du deuxième simulateur est avancé et poursuivi au troisième point de temps t₂ lorsque le troisième point de temps t₂ est dans le futur du temps de simulation local.

18. Procédé selon l'une des revendications précédentes, dans lequel le temps de simulation local du premier et/ou du second simulateur est maintenu, et le maintien est effectué directement après que la mesure a été décidée ou que l'algorithme de prise de décision a été achevé, ou lorsque la taille des données du message est calculée.

19. Procédé selon la revendication 18, dans lequel lorsque le troisième point de temps a été calculé et se situe dans le futur par rapport au temps de simulation local arrêté, et que le calcul des équations du modèle du réseau de distribution d'énergie (1) n'est pas encore terminé, le premier simulateur sera poursuivi jusqu'à la fin du calcul de l'équation, et après cela, le temps de simulation local du premier et/ou du second simulateur est avancé au troisième point de temps t₂.
